(19) Europäisches Patentamt
European Patent Office
Office européen des brevets

(11) **EP 1 685 198 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
***C09C 1/00*** *(2006.01)*

(21) Anmeldenummer: **04803193.4**

(22) Anmeldetag: **19.11.2004**

(86) Internationale Anmeldenummer:
**PCT/EP2004/013173**

(87) Internationale Veröffentlichungsnummer:
**WO 2005/049739 (02.06.2005 Gazette 2005/22)**

(54) **EFFEKTPIGMENTE MIT ALUMINIUM- ODER ALUMINIUMLEGIERUNGSKERN, VERFAHREN ZU DEREN HERSTELLUNG UND VERWENDUNG DERSELBEN**

EFFECT PIGMENTS COMPRISING AN ALUMINIUM CORE OR AN ALUMINIUM ALLOY CORE, METHOD FOR THE PRODUCTION AND USE THEREOF

PIGMENTS A EFFETS COMPRENANT UN COEUR D'ALUMINIUM OU D'ALLIAGE D'ALUMINIUM, PROCEDE DE REALISATION ET LEUR UTILISATION

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **21.11.2003 DE 10354763**

(43) Veröffentlichungstag der Anmeldung:
**02.08.2006 Patentblatt 2006/31**

(73) Patentinhaber: **Eckart GmbH & Co. KG**
**90763 Fürth (DE)**

(72) Erfinder:
• **HENGLEIN, Frank**
**90409 Nürnberg (DE)**

• **BIRNER, Hermann**
**92237 Sulzbach-Rosenberg (DE)**
• **GRÜNER, Michael**
**91275 Auerbach (DE)**

(74) Vertreter: **LOUIS, PÖHLAU, LOHRENTZ**
**Postfach 3055**
**90014 Nürnberg (DE)**

(56) Entgegenhaltungen:
**EP-A- 0 580 022          EP-A- 1 270 684**
**WO-A-00/09617          WO-A-96/38505**

## Beschreibung

Die vorliegende Erfindung betrifft Effektpigmente mit einem Aluminium- oder Aluminiumlegierungskern und einer den Aluminium- oder Aluminiumlegierungskern umhüllenden Aluminiumoxid- oder Aluminiumoxid/hydroxid-haltigen Schicht, erhältlich durch naßchemische Oxidation plättchenförmiger Aluminium- oder Aluminiumlegierungs-Pigmente, wobei der Gehalt an metallischem Aluminium im Aluminium- oder Aluminiumlegierungskern nicht mehr als 90 Gew.-%, bezogen auf das Gesamtgewicht des Pigments, beträgt. Des weiteren betrifft die Erfindung ein Verfahren zur Herstellung dieser Effektpigmente als auch die Verwendung derselben.

Effektpigmente erzeugen einen optischen Eindruck, der vom Einstrahlungs- bzw. Beobachtungswinkel der Applikation abhängt. Dies ist einerseits auf die parallel ausgerichtete Orientierung der plättchenförmigen Pigmente innerhalb des Anwendungsmediums und anderseits auf die spezifischen optischen Eigenschaften des Effektpigmentes zurückzuführen. So wirken insbesondere Aluminiumpigmente aufgrund ihrer hohen Reflexion sichtbaren Lichtes wie ein Ensemble kleiner Spiegel. Dies äußert sich in einem ausgeprägten Hell-Dunkel Kontrast ("Helligkeitsflop") bei Betrachtung vom Glanzwinkel hin zu steileren Beobachtungswinkeln. Derartige Pigmente lassen sich mit verschiedenen Schichten unterschiedlich stark brechender und/oder farbiger Materialien beschichten. Als Folge werden brillante farbige Effektpigmente erhalten. Die Farbgebung ist dabei eine Mischung aus Absorptions-, Interferenz- und Reflexionsphänomenen. Insbesondere durch das Ausnützen von Interferenzphänomenen werden Effektpigmente mit starken Farbflops erzielt.

Im Gegensatz zu Perlglanzpigmenten besitzen derartige Effektpigmente aufgrund ihres völlig opaken Aluminiumkernes ein sehr gutes Deckvermögen.

Neben den silberfarbigen Aluminiumpigmenten können Goldbronze-Pigmente, die Legierungen aus Kupfer und Zink darstellen, goldene Farbtöne erzeugen. Weitere farbige Metallpigmente können durch Beschichtung derselben mit farbigen und/oder hochbrechenden Oxiden hergestellt werden. So sind eisenoxidbeschichtete Aluminiumpigmente, die im Glanzwinkel intensive goldene bis orange Farbtöne aufweisen, in der EP 33 457 beschrieben und unter dem Handelsnamen "Paliocrom®" von der BASF, Ludwigshafen, Deutschland, erhältlich. Es handelt sich hierbei um lediglich mit Eisenoxid beschichtete Aluminiumpigmente. Die Farbgebung ist hier eine Mischung aus der Absorptionsfarbe des rötlichen Eisenoxids in der Hämatitmodifikation, Interferenzeffekten an der Eisenoxidschicht (Brechzahl: ca. 2,3) und Reflexion an der Aluminiumoberfläche. Diese Pigmente weisen bei höheren Betrachtungswinkeln jedoch lediglich einen Farbflop nach unbunt auf ohne ihren Farbort signifikant zu ändern. Auch ist die in der Praxis zugängliche Farbpalette begrenzt. Der Grund hierfür liegt in der möglichen, stark exothermen Thermitreaktion begründet:

$$2\,Al + Fe_2O_3 \rightarrow Al_2O_3 + 2\,Fe$$

Da die Eisenoxidschicht als Beschichtung innigsten Kontakt mit dem zugrunde liegenden Aluminiumpigment hat, kann diese sehr exotherme Reaktion nach Zufuhr einer gewissen Aktivierungsenergie gestartet werden. Aufgrund der feinteiligen Natur der Pigmente ist ein "Durchbrennen" mit erheblichen Sicherheitsrisiken verbunden. Dies führt dazu, daß in der Praxis die Eisenoxidschicht auf eine Schichtdicke begrenzt werden muß, die einer unterstöchiometrischen Menge an Eisenoxid entspricht. Auf diese Weise sind jedoch beispielsweise kräftige Rottöne nicht zugänglich. Derartige Farbtöne würden aufgrund der Interferenzspirale erst bei höheren Eisenoxidschichtdicken nach den Farbtönen Gold, Orange und Kupfer erscheinen. Die Herstellung dieser Effektpigmente erfolgt durch CVD-Verfahren in einem Wirbelbettreaktor. Eisenoxidschichten werden durch Zersetzung von Eisenpentacarbonyl in Gegenwart von Sauerstoff auf die im Wirbelbett fluidisierten Aluminiumpigmente gefällt.

Weiterhin sind auch Effektpigmente bekannt, bei denen zunächst eine Beschichtung aus einem Material mit niedrigem Brechungsindex aufgebracht wird und anschließend eine teiltransparente Beschichtung mit einem hochbrechenden Material. Bei letzterer Beschichtung handelt es sich um Metallschichten oder hochbrechende Metalloxide oder -sulfide. Hier werden Interferenzpigmente mit einem möglichst hohen Farbflop, d.h. einer Änderung des Farborts, erzeugt. Daher ist es das Bestreben bei dieser Klasse von Interferenzpigmenten, optisch möglichst perfekte homogene Schichten zu erzeugen.

Die spektakulärsten Effekte hinsichtlich der Farbflops erreicht man mit Effektpigmenten, bei denen die Beschichtungen mittels PVD-Verfahren auf einem dünnen Metallsubstrat aufgedampft werden. So werden gemäß der Lehre der US 5,059,245 und der US 5,135,812 Pigmente zunächst mit einer Beschichtung aus einem niedrig brechenden Material (n< 1,65) versehen und anschließend mit einer teiltransparenten Metallbeschichtung. Es werden optisch äußerst homogene und gleichmäßige Schichten erzeugt.

Diese Pigmente haben den Nachteil, daß sie aufgrund ihrer Herstellungsweise an den Seiten nicht vollständig von den äußeren Schichten umhüllt sind. Besteht der Metallkern oder bestehen die äußeren Schichten aus dem korrosionsanfälligen Aluminium, so würde die Verwendung dieser Pigmente in beispielsweise Wasserlacken zu Gasungsproblemen aufgrund der Wasserstoffentwicklung führen. Die äußeren Metallschichten können ebenfalls Korrosionsprobleme hervorrufen. Ein weiterer Nachteil sind die extrem hohen Herstellungskosten. Sie verhindern auch den Einsatz dieser Pigmente in vielen Marktsegmenten.

Die **EP 0 668 329 A2** beschreibt ein Effektpigment, bei dem Aluminiumpigmente zunächst nasschemisch mit Siliziumoxid oder -oxidhydrat oder mit Aluminiumoxid, -oxidhydrat beschichtet wird. Anschließend erfolgt eine Beschichtung mit Metall durch CVD-Verfahren oder durch stromlose naßchemische Metallabscheidung. Alternativ werden nicht selektiv absorbierende (farblose) Metalloxide durch ein CVD-Verfahren im Wirbelbettreaktor oder auch naßchemisch aus organischen Metallverbindungen in einem organischen Lösemittel abgeschieden.

In der **EP 0 708 154 A2** werden Effektpigmente mit zunächst einer Beschichtung mit einem Brechungsindex n < 1,8 und anschließend einer farbigen Beschichtung mit n > 2,0 beschrieben. Die hochbrechende Beschichtung wird bevorzugt durch CVD-Verfahren im Wirbelbettreaktor aufgebracht, jedoch sind hier auch naßchemische Verfahren durch hydrolytische Zersetzung organischer Metallverbindungen beschrieben.

Man erhält farbstarke Effektpigmente, die einen außerordentlich starken Farbflop aufweisen. Bei Verwendung von Eisenoxid ($Fe_2O_3$) als hochbrechende Schicht sind Pigmente im Gold-Rotbereich zugänglich.

Diese Effektpigmente weisen jedoch eine Reihe von Nachteilen auf:

So ist es nicht immer von Vorteil, möglichst gleichmäßige und optisch homogene Schichten auf die Aluminiumpigmente aufzubringen. Auf diese Weise wird zwar die Ausbildung intensiver Interferenzfarben und damit starker Farbflops ermöglicht; die Farbflops gehen teilweise bis in den Komplementärfarbenbereich hinein. Jedoch bringen derart starke Farbflops nicht in allen Anwendungen wirklich Vorteile. So sind beispielsweise im sehr großen, stilistisch eher konservativen Marktsegment der Automobillackierung Effektpigmente mit starkern Farbflop nicht erwünscht, da der Effekt vom Kunden als zu stark empfunden wird. In die Formulierung einer Automobillackierung müssen in diesem Fall nachteiligerweise "Flopbrecher", wie sie beispielsweise in der **EP 0 717 088** beschrieben sind, zugesetzt werden, um den starken Farbflop-Effekt zu verringern. Eine derartige Lösung ist jedoch unwirtschaftlich. Außerdem kann und will der Designer Farbflops durch geeignete Kombinationen von Effektpigmenten mit transparenten oder deckenden Buntpigmenten selbst gestalten. Gewünscht sind daher eher Effektpigmente mit einem schwachen Farbflop.

Des weiteren besteht ein Bedürfnis nach metallischen Effektpigmenten mit gutem Deckvermögen und bislang nicht zugänglichen Farben wie rot oder grün oder Kupferfarben, die wetterstabil sind und keinen wesentlichen Farbflop aufweisen. Beispielsweise gibt es bislang keine roten Metalleffektpigmente bzw. rote Metalleffektpigmentlacke, die nicht zugleich einen Blaustich aufweisen.

Generell sind alle CVD-Verfahren teurer als naßchemische Beschichtungsverfahren. Die naßchemische Beschichtung mit $SiO_2$ oder Aluminiumoxiden hat jedoch Nachteile: Um zu den gewünschten Interferenzeffekten zu gelangen, müssen notwendigerweise bestimmte Schichtdicken erreicht werden. Insbesondere bei Siliziumdioxid sind aufgrund des niedrigeren Brechungsindexes (ca. 1,5) hohe Schichtdicken notwendig. Dadurch jedoch wird die Gesamtdicke des Effektpigmentes relativ groß. Dies führt zu schlechtem Deckvermögen sowie einem relativ schlechten Orientierungsverhalten der Pigmente und teilweise zu einer räumlichen Behinderung der stapelförmigen Pigmente in der Lackierung. Als Folge treten Glanzverluste, Glanzschleierphänomene und Verluste der Abbildeschärfe (DOI) in der Lackierung auf.

Bei der direkten naßchemischen Abscheidung von Aluminiumoxiden bzw. -hydroxiden auf Aluminiumpigmenten treten weitere Nachteile auf: Derartige Schichten besitzen nur mangelhafte Gasungsstabilitäten, da die abgeschiedenen Schichten nicht dicht und nicht homogen genug sind. Die Aluminiumpigmente sind herstellungsbedingt mit Mahlhilfsmitteln wie Fettsäuren belegt. Diese wirken als Sperrschicht für die Abscheidung des Aluminiumoxides, was zu undichten Schichten führt, die außerdem keine gute Haftung zum Substrat aufweisen. Zwar können die Aluminiumpigmente gemäß der Lehre der **DE 42 23 384** in einer Gasphasenreaktion durch Reaktion mit Wasser in einer sauerstoffhaltigen bewegten Atmosphäre weitgehend von den auf der Oberfläche adsorbierten Fettsäuren befreit werden. Jedoch ist eine solche Vorgehensweise aufgrund der hohen Kosten nicht wirtschaftlich.

Eine ausschließlich naßchemische Belegung von Aluminiumpigmenten mit Oxidschichtpaketen wird in der **WO 00/09617** beschrieben. Hier werden alle Beschichtungen in wäßrigem Medium durchgeführt. Unterschiedliche Schichten werden dabei bei verschiedenen, fixierten pH-Werten vorgenommen. Es wird zunächst eine amorphe glasartige Schicht ($SiO_2$, Phosphat, Borat) aufgebracht und anschließend ein hochbrechendes Oxid abgeschieden.

Da die Oxidbeschichtung bei teilweise extremen pH-Werten durchgeführt wird, müssen die Aluminiumpigmente zuvor passiviert werden. Als Möglichkeiten sind hier eine Behandlung mit Wasserstoffperoxid oder Salpetersäure genannt. Diese Verfahren ergeben jedoch keine gut passivierten Pigmente. Bei zu heftiger Behandlung werden die Pigmente zudem in ihren optischen Eigenschaften (Brillanz, Helligkeit) deutlich geschädigt.

Somit stellt sich das Problem einer nicht ausreichenden Gasungsstabilität während den weiteren Oxidbeschichtungen und im Endprodukt.

Von großem Nachteil bei allen im Stand der Technik bekannten Mehrschichtpigmenten, die naßchemisch oder durch CVD-Abscheidung hergestellt werden, ist die Tatsache, daß alle Schichten auf das Aluminiumpigment als Ausgangssubstrat aufgefällt werden müssen. Das Aluminiumpigment ist somit in seiner ursprünglichen Dicke auch im Interferenzpigment als Reflektorkern vorhanden. Diese Dicke liegt jedoch herstellungsbedingt weit oberhalb jener Schichtdicke, die für optische Undurchlässigkeit und damit sehr gutes Deckvermögen notwendig wäre. Daher sind die Aluminiumkerne bei den in den oben erwähnten Schriften offenbarten Pigmenten dicker als nötig. Dies äußert sich in einer Einbuße an Deckvermögen. Alle weiteren Beschichtungen erhöhen zudem die Gesamtschichtdicke des Effektpigmentes, was zu vermindertem Glanz, Glanzschleierproblemen in der Lackierung und schlechter Abbildeschärfe führt.

In der **EP 0 848 735** werden naßchemisch oxidierte Aluminiumpigmente, die in einem Gemisch aus Wasser und einem organischen Lösemittel oxidiert werden, beschrieben. Die Pigmente müssen vor der Oxidation keinerlei Entfettungsbehandlung unterzogen werden. Die Pigmente weisen Farben im Bereich von nickel, hellgold bis bronze auf. Diese Farben sind jedoch nur schwach und in der Farbpalette sehr begrenzt.

In der Offenlegungsschrift **DE 26 27 428** wird ein Verfahren zur Herstellung von gefärbtem Aluminiumpulver beschrieben. Offenbart wird die Abscheidung aus einem Metallsalz und einem organischen Chelatbildner aus einer schwach alkalischen Lösung. Die Aluminiumpigmente können dabei in einer ersten Behandlungsstufe zur Passivierung mit einem oberflächlichen glatten Boehmitfilm überzogen werden. Des weiteren ist der gemäß der Lehre der **DE 26 27 428** erzeugte oberflächliche und glatte Boehmitfilm in seiner Schichtdicke begrenzt und liegt weit unterhalb des Bereiches, ab dem diese Schicht als Interferenzstrecke zur Erzeugung von Interferenzfarben wirksam ist.

Mit dem Verfahren gemäß der Lehre der **DE 26 27 428** werden farbige Pigmente erhalten, die lediglich im Goldbereich liegen. Rote oder grüne Pigmente sind hiermit nicht erhältlich.

EP0580022 offenbart Glanzpigmente auf der Basis von metalloxidbeschichteten Aluminiumplättchen. Die Aluminiumplättchen werden zunächst in einem Sauerstoff (Luft)/Wasserdampfgemisch bei 180 bis 220°C erhitzt. Durch diese Behandlung werden sowohl physikalisch als auch chemisch an der Aluminiumoberfläche gebundene organische Verunreinigungen entfernt. Die resultierende fettarme, hydrophile Oberfläche ist hervorragend zur Abscheidung haftfester Metalloxidschichten geeignet. Nachfolgend kann eine gewünschte Metalloxidschicht durch Gasphasenzersetzung aufgebracht werden.

Aufgabe der vorliegenden Erfindung ist es, farbige und witterungsbeständige Effektpigmente bereitzustellen, die eine minimale Gesamtdicke, festhaftende Oxidschichten und sicherheitstechnische Unbedenklichkeit aufweisen. Des weiteren sollten die Effektpigmente einen weichen Farbflop oder eine intensive Farbe ohne wesentlichen Farbflop besitzen. Gegenüber den bekannten Interferenzpigmenten sollten sie eine deutlich verbesserte Deckkraft besitzen. Ebenfalls Aufgabe der vorliegenden Erfindung ist es, ein kostengünstiges Verfahren zur Herstellung dieser farbigen Aluminiumpigmente zu entwickeln.

Die der Erfindung zugrunde liegende Aufgabe wird gelöst durch Effektpigmente mit einem Aluminium- oder Aluminiumlegierungskern und einer den Aluminium- oder Aluminiumlegierungskern umhüllenden Aluminiumoxid- oder Aluminiumoxid/hydroxid-haltigen Schicht, erhältlich durch naßchemische Oxidation plättchenförmiger Aluminium- oder Aluminiumlegierungs-Pigmente, wobei der Gehalt an metallischem Aluminium im Aluminium- oder Aluminiumlegierungskern nicht mehr als 90 Gew.-%, bezogen auf das Gesamtgewicht des Pigments, beträgt, wobei die oxidierten Aluminium- oder Aluminiumlegierungs-Pigmente wenigstens eine hochbrechende Metallchalkogenidschicht mit einem Brechungsindex von > 1,95 aufweisen und zwischen der hochbrechenden Metallchalkogenidschicht und der umhüllenden Aluminiumoxid- oder Aluminiumoxid/hydroxid-haltigen Schicht eine Mischschicht ausgebildet ist.

Bevorzugte Weiterbildungen sind jeweils in den Unteransprüchen angegeben.

Gemäß einer bevorzugten Ausführungsform weisen die eingesetzten Aluminiumpigmente eine Mindestreinheit von 98 Gew.-%, weiter bevorzugt von wenigstens 99 Gew.%, noch weiter bevorzugt von wenigstens 99,5 Gew.-%, jeweils bezogen auf das Gewicht des eingesetzten Ausgangspigments, auf.

Bei Verwendung von Aluminiumlegierungspigmenten als Ausgangspigmente beträgt der von Aluminium verschiedene Metallgehalt vorzugsweise wenigstens 5 Gew.-%, bezogen auf den Metallgehalt des eingesetzten Ausgangspigmentes. Vorzugsweise enthält die Aluminiumlegierung Eisen, Mangan, Kupfer, Vanadium, Chrom, Nickel, Kobalt, Silizium, Magnesium, Zink und/oder Titan.

Die bei den erfindungsgemäßen Effektpigmenten durch naßchemische Oxidation erzeugte Aluminiumoxidschicht bzw. Aluminiumoxid/-hydroxidschicht kann eine reine Aluminiumoxidschicht oder eine gemischte Schicht aus Aluminiumoxid und Aluminiumhydroxid sein. Nachstehend wird aus Gründen der einfacheren Schreibweise überwiegend von einer Aluminiumoxid/-hydroxidschicht gesprochen.

Vorzugsweise sind die Metallchalkogenide Metalloxide, Metallsulfide, Metallselenide, Metalltelluride oder Gemische davon.

Besonders bevorzugt sind die Metallchalkogenide Metalloxide.

Die nachstehenden Erläuterungen, die in bezug auf Aluminiumpigmente gegeben werden, gelten entsprechend für Aluminiumlegierungspigmente.

Die durch naßchemische Oxidation erhaltenen oxidierten Aluminiumpigmente besitzen eine Oxid/Hydroxidschicht mit einer ausgeprägten Porosität. Dadurch kann bei der weiteren Beschichtung mit einem höherbrechendem Metallchalkogenid, vorzugsweise Metalloxid, eine Mischschicht, vorzugsweise eine oxidische Mischschicht, gebildet werden, da das aufgefällte Metallchalkogenid, vorzugsweise Metalloxid, mit einem Brechungsindex > 1,95 zumindest teilweise in die Poren eindringt.

Hierdurch resultiert vorzugsweise ein Gradient des Brechungsindexes entlang der Pigmentoberflächennormale. Dies trägt zu einem weichen, dezenten Farbflop des erfindungsgemäßen Effektpigmentes bei.

Die durch naßchemische Oxidation erzeugte Aluminiumoxid/-hydroxidschicht stellt weiterhin eine effektive Barriere für mögliche aluminothermische Reaktionen des Aluminiumkernes und der Metallchalkogenidschicht, vorzugsweise Metalloxidschicht, mit einem Brechungsindex > 1,95 dar.

Die der Erfindung zugrunde liegende Aufgabe wird weiterhin durch ein Verfahren zur Herstellung von Effektpigmente nach einem der Ansprüche 1 bis 27 gelöst, das die folgenden Schritte umfaßt:

(a) Oxidieren von Aluminium- oder Aluminiumlegierungs-Pigmenten, die in einer organisches Lösungsmittel enthaltenden Flüssigphase suspendiert sind, unter Verwendung eines Oxidationsmittels,

(b) Aufbringen wenigstens einer Metallchalkogenidschicht mit einem Brechungsindex von > 1,95 auf die im Schritt (a) oxidierten Pigmente, wobei sich zwischen der Metallchalkogenidschicht und der Aluminiumoxid/-hydroxidschicht eine Mischschicht ausbildet.

Bevorzugte Weiterbildungen sind jeweils in den Unteransprüchen angegeben.

Die Aufgabe der Erfindung wird ferner durch die Verwendung der gemäß einem der Ansprüche 1 bis 27 hergestellten Effektpigmente in Coatings, Lacken, Automobillacken, Pulverlacken, Druckfarben, Tinten, Kunststoffen, Gläsern, Keramiken oder kosmetischen Zubereitungen gelöst.

Die erfindungsgemäßen Effektpigmente eignen sich insbesondere zur Verwendung in kosmetischen Zubereitungen wie Nagellack, Lippenstift, Make-up, Haarpflegemittel, Hautpflegemittel, Mascara, Lidschatten, Eyeliner, Rouge, Parfum, Eau de Toilette, Puder (lose oder gepreßt) oder Tattooformulierungen.

Die vorliegende Erfindung betrifft die Bereitstellung von Effektpigmenten mit weichem Farbflop und gutem Deckvermögen. Sie sind aufgebaut aus zunächst einem naßchemisch oxidierten plättchenförmigen Aluminium- oder Aluminiumlegierungspigment mit einem Gehalt an metallischem Aluminium von nicht mehr als 90 Gew.-%, bezogen auf das Gesamtgewicht. Zur Erzeugung und Intensivierung der Farbe wird es mit mindestens einer weiteren Oxidschicht mit einem Brechungsindex > 1,95 beschichtet. Zwischen der hochbrechenden Metallchalkogenidschicht, vorzugsweise Metalloxidschicht, und der Aluminiumoxidschicht bildet sich eine Mischschicht, die einen Brechungsindex aufweist, der zwischen dem Brechungsindex der reinen Aluminiumoxidschicht bzw. -hydroxidschicht und dem Brechungsindex der reinen Metallchalkogenidschicht, vorzugsweise Metalloxidschicht, liegt.

Effektpigmente mit einem Kern aus Aluminium sind u.a. unter dem Handelsnamen "Variocrom$^{®}$" auf dem Markt und werden von der BASF angeboten. Hier wird zunächst eine dicke, niedrig brechende $SiO_2$-Schicht naßchemisch mittels Sol-Gel-Verfahren auf Aluminiumflakes aufgefällt und anschließend im Wirbelbettverfahren aus Eisenpentacarbonyl eine Eisenoxidschicht gefällt. Der Aluminiumkern dient hierbei als Reflektormaterial und erhöht als völlig opakes Material im Vergleich zu Interferenzpigmenten wie etwa Perlglanz das Deckvermögen wesentlich. Die $SiO_2$-Schicht dient als niedrigbrechende interferenzstrecke. Auf dem Markt befindliche Produkte ("Magic Red$^{™}$" und Magic Gold$^{™}$") haben $SiO_2$-Schichtdicken von 320 bis ca. 400 nm (R. Schmidt, N. Mronga, V. Radtke und O. Seeger, "Luster Pigments with Optically Variable Properties", *4th Nürnberg Congress,* Paper 10, 1998). Die Schichten werden hier aus optischer Sicht möglichst homogen aufgetragen, um starke Interferenzeffekte zu ermöglichen. Dies führt zu Effektpigmenten mit sehr starken Farbflops, die bis in den Komplementärfarbenbereich führen. Derart starke Effekte sind jedoch keineswegs immer erwünscht und werden in vielen Anwendungen als zu "knallig" empfunden.

Effektpigmente mit weichem Interferenz-Farbflop werden vorteilhaft aus optisch nicht ganz homogenen Schichten aufgebaut. So zeigte sich überraschenderweise, daß naßchemisch oxidierte Aluminiumflakes, wie sie in der EP 0 848 735 beschrieben werden, die hiermit unter Bezugnahme aufgenommen ist, ausgezeichnete Ausgangspigmente liefern, um nach weiterer Beschichtung mit hochbrechenden Metallchalkogenidschichten, vorzugsweise - Metalloxidschichten, Effektpigmente mit weichem Farbflop bereit zu stellen. Weiterhin zeigte sich, daß die naßchemische Oxidation von Aluminiumflakes kontrolliert durchgeführt werden kann, so daß sich die Aluminiumoxid- bzw. -hydroxidschichtdicke gezielt einstellen läßt. Die Aluminiumoxid- bzw. Aluminiumhydroxidschicht dient zum einen als Interferenzfarbenstrecke und zum anderen, um die nachträglich aufgebrachten Metallchalkogenidschichten, vorzugsweise Metalloxidschichten, zuverlässig und fest haftend zu verankern. Des weiteren kann sie als Sperrschicht wirken und die aluminothermische Reaktion zwischen dem Aluminiumkern oder dem Aluminiumlegierungskern und der hochbrechenden Metallchalkogenidschicht, vorzugsweise Metalloxidschicht, wirksam unterbinden. Dadurch ist eine sicherheitstechnische Unbedenklichkeit der erfindungsgemäßen Effektpigmente gegeben.

Bei der naßchemischen Oxidation wird der metallische Kern, d.h. der Aluminiumkern oder Aluminiumlegierungskern, dünner und die Aluminiumoxid/ -hydroxydschicht wächst teilweise in den Kern hinein und teilweise auf den Kern auf. Dabei wird der metallische Kern stark aufgerauht, was sich anhand von Querschliffen elektronenmikroskopisch nachweisen läßt. Diese stark aufgerauhte Metalloberfläche bewirkt eine stärkere Streuung von einfallendem Licht im Vergleich zu glatten Metalloberflächen. Dies wiederum trägt zu einem weichen Farbflop der erfindungsgemäßen Effektpigmente bei.

Die durch naßchemische Oxidation erzeugte Aluminiumoxid- bzw. -hydroxidschicht besitzt eine poröse Struktur.

Poren entstehen u.a. durch das bei der naßchemischen Oxidation frei werdende Wasserstoffgas, welches sich seinen Weg durch die entstehende Aluminiumoxid bzw. -hydroxydschicht bahnt:

$$2\,Al + (n+3)\,H_2O \rightarrow Al_2O_3 \times nH_2O + 3\,H_2\uparrow$$

Die poröse Struktur macht sich beispielsweise bemerkbar in einem Anstieg der spezifischen Oberfläche im Vergleich zum unbehandelten Aluminiumpigment. Dies kann anhand von BET-Messungen nachvollzogen werden: So steigt bei den erfindungsgemäß verwendeten naßchemisch oxidierten Aluminiumpigmenten die spezifische Oberfläche It. BET um mindestens den Faktor 2,5, bevorzugt mindestens um den Faktor 7, besonders bevorzugt mindestens um den Faktor 10 und ganz besonders bevorzugt mindestens um den Faktor 15 gegenüber dem unbehandelten Pigment an.

Die Schichtdicken des Aluminiumoxides/-hydroxides hängen vom Oxidationsgrad des Aluminiums sowie von der Schichtdicke des verwendeten Aluminiumpigmentes ab. Sie betragen 20 bis 500 nm, bevorzugt 30 bis 450 nm, weiter bevorzugt 50 bis 400 nm und noch weiter bevorzugt 70 bis 300 nm.

Die Porosität der Aluminiumoxidschicht bewirkt, daß die Metallchalkogenidschicht mit einem Brechungsindex > 1,95 zunächst zumindest teilweise in die Poren gefällt wird. Dadurch entsteht eine ausgeprägte Mischoxidschicht. Diese ist verbunden mit einem Gradienten des Brechungsindexes innerhalb des Schichtpaketes und senkrecht zur Pigmentoberfläche. Dabei variiert der Brechungsindex zwischen dem Brechungsindex der reinen Aluminiumoxid bzw.-hydroxidschicht und dem Brechungsindex der reinen hochbrechenden Metallchalkogenidschicht. All diese Effekte tragen letztendlich zu einem weichen, dezenten Farbflop des erfindungsgemäßen Effektpigmentes bei. Erst bei Beschichtung mit größeren Oxidmengen entsteht noch eine weitgehend homogene Oxidschicht mit einem höheren Brechungsindex.

Die zwischen der Aluminiumoxid/-hydroxidschicht und der aufgebrachten Metallchalkogenidschicht, vorzugsweise Metalloxidschichtschicht, ausgebildete Mischschicht weist bevorzugt eine Schichtdicke von wenigstens 10 nm, weiter bevorzugt von wenigstens 20 nm, noch weiter bevorzugt von wenigstens 30 nm, auf.

Die hochbrechende Metallchalkogenidschicht, vorzugsweise eine Metalloxidschicht, mit einem Brechungsindex > 1,95 kann zum einen farbig sein und Materialien wie Eisenoxide, Eisenoxidhydrate, Vanadiumoxide, Wolframoxide, Chromoxide und/oder Molybdänsulfid umfassen. Sie kann aus aufeinander folgenden Schichten aus diesen Materialien, aus Mischschichten dieser Materialien oder aus aufeinander folgenden Schichten der reinen Schichten und/oder der Mischschichten dieser Materialien bestehen.

Die Chalkogenidschicht, vorzugsweise Metalloxidschicht, kann eine Schichtdicke von 20 nm bis 150 nm, vorzugsweise von 25 nm 70 nm, aufweisen.

Bei Verwendung von Eisenoxiden für die Metalloxidschicht mit einem Brechungsindex >1,95 werden vorzugsweise Modifikationen wie Hämatit, Goethit und/oder Magnetit oder Mischungen derselben verwendet.

Bevorzugt liegen rote Eisenoxidschichten überwiegend in der Hämatitmodifikation vor.
Derartige Effektpigmente sind koloristisch vor allem für den Gold-Rot-Bereich interessant.

Bei Verwendung von Chrom(III)hydroxid als Metalloxid werden bevorzugt Effektpigmente im grünen Bereich erhalten.

In Abhängigkeit der Schichtdicken sowohl der Aluminiumoxid/-hydroxidschicht als auch der hochbrechenden Metallchalkogenidschicht, vorzugsweise Metalloxidschicht, können Effektpigmente mit sehr dezenten Farbflops erhalten werden. Stimmt man die Schichtdicke der Aluminiumoxid/-hydroxidschicht so ab, daß sie die Eigenfarbe des farbigen Metallchalkogenids, vorzugsweise Metalloxides, verstärkt, also beispielsweise Rot bei Eisenoxid (Hämatit) oder Grün bei Chromhydroxid, so sind farbstarke Effektpigmente ohne wesentlichen, vorzugsweise ohne, Farbflop zugänglich.

Quantitativ wird im Rahmen dieser Erfindung der Farbflop $\Delta H^*_{Anker}$ als maximale Differenz der einzelnen $H^*_{Anker}$ Werte der fünf Ankerwinkel 25°/140°; 45°/150°; 45°/120°; 75°/120° und 75°/90° verstanden. Die Details hierzu und das Applikationssystem sind weiter unten beschrieben.

Unter einem schwachen oder dezenten oder leichten Farbflop werden im Rahmen dieser Erfindung $\Delta H^*_{Anker}$ Werte von 1,5 bis 50, vorzugsweise von 2,0 bis 45, besonders bevorzugt von 2,5 bis 40 und weiterhin besonders bevorzugt von 2,5 bis 35 verstanden.
Erfindungsgemäße Effektpigmente ohne wesentlichen Farbflop zeigen $\Delta H^*_{Anker}$ Werte von 1,5 bis 5, vorzugsweise von 2,0 bis 4,5, besonders bevorzugt von 2,5 bis 4,0.
Oberhalb von $\Delta H^*_{Anker}$ Werten von 50 werden die Effektpigmente in der Applikation als mit sehr starkern Farbflop wahrgenommen. Unterhalb von $\Delta H^*_{Anker}$ 1,5 hingegen kann vom Beobachter praktisch kein Farbflop beobachtet werden. Unter dem Farbortwert H* (Hue) wird dabei der im CieLab-Farbmessystem übliche Wert H* verstanden, der sich gemäß der Formel

$$H^* = \arctan(b^*/a^*)$$

berechnet und geometrisch betrachtet den Winkel des Farbortvektors zur positiven a\*-Achse darstellt.

Um einen Farbflop einer Applikation wahrzunehmen, muß die diese jedoch eine gewisse Farbsättigung, d.h. Chroma C\* besitzen. Bei unbunten Applikationen läßt sich zwar ein Farbort H\* messen und bestimmen, jedoch nimmt der Beobachter diese Farbe gar nicht war. Dementsprechend kann auch ein Farbflop und insbesondere ein schwacher Farbflop nicht wahrgenommen werden. Daher weisen die erfindungsgemäßen Effektpigmente im weiter unten beschriebenen Applikationssystem und den angegebenen Meßbedingungen bei einem Einfallswinkel von 45° und einem Beobachtungswinkel von 110° gegenüber der Oberflächenebene vorzugsweise mindestens ein Chroma C\* von 15, weiter bevorzugt von 20, besonders bevorzugt von 25 und weiterhin besonders bevorzugt von 35 auf.

Die erfindungsgemäßen Effektpigmente können vorteilhafterweise ausschließlich anorganische Beschichtungen aufweisen und sind mithin äußerst wetterstabil.

Im Fall von Eisenoxidschichten besteht als Beschichtungsmaterial von Aluminiumpigmenten grundsätzlich ein inhärentes Sicherheitsrisiko. Scheidet man Eisenoxid direkt auf den feinteiligen Aluminiumflakes ab, besteht nach Zufuhr geeigneter Aktivierungsenergie die Gefahr der Thermitreaktion:

$$2\,Al + Fe_2O_3 \rightarrow Al_2O_3 + 2\,Fe$$

Das Sicherheitsrisiko dieser stark exotherm verlaufenden Reaktion zwingt in der Praxis dazu, nur relativ geringe Eisenoxidschichtdicken aufzubringen, um die stöchiometrischen Verhältnisse $Fe_2O_3$ zu Al (wobei hier vor allem das oberflächliche Aluminium gemeint ist) gering zu halten. Dies führt dazu, das die theoretisch mögliche Farbpalette, die sich aus der Kombination der Eigenfärbung des Eisenoxides mit Interferenzeffekten dieses hochbrechenden Oxides ergibt, nicht voll ausgeschöpft werden kann. So sind bei dem marktgängigen Produkt Paliocrom® (BASF) lediglich die Farbtöne Gold und Orange erhältlich. Ein Kupfer- oder Rotton, der sich bei dickeren Eisenoxidschichtdicken einstellen müßte, kann aus Sicherheitsgründen nicht hergestellt werden.

An dieser Stelle bieten die erfindungsgemäßen Pigmente den großen Vorteil, daß das durch naßchemische Oxidation erzeugte Aluminiumoxid/-hydroxid als Sperrschicht zwischen Eisenoxid und Aluminium wirkt. Die Schichtdicke dieser Aluminiumoxid/-hydroxidschicht beträgt vorzugsweise wenigstens 20 nm, weiter bevorzugt 30 bis 40 nm. Gemäß einer weiter bevorzugten Ausführungsform liegt die Schichtdicke im Bereich von 80 bis 300 nm.

Bei einer weiteren erfindungsgemäßen Ausführungsform besitzt die Metallchalkogenidschicht, vorzugsweise Metalloxidschicht, mit einem Brechungsindex > 1,95 keine wesentliche Eigenfärbung. In diesem Fall werden vorzugsweise Materialien wie Titanoxid, Zirkonoxid, Zinkoxid, Zinnoxid und/oder Ceroxid verwendet. Auch hier sind Kombinationen dieser Materialien in aufeinander folgenden Schichten, in Mischschichten dieser Materialien oder in aufeinander folgenden Schichten der reinen Schichten und/oder der Mischschichten möglich.

Eine weitere erfindungsgemäße Ausführungsform schließlich betrifft Beschichtungen mit Metallchalkogeniden, vorzugsweise Metalloxiden, mit einem Brechungsindex > 1,95, bei denen sich farbige und nichtfarbige Schichten abwechseln. Es können auf diese Weise bis zu 4 Schichtpakete aufgebracht werden. So sind besonders starke Interferenzfarben zu erzielen. Bei mehr als 4 Schichtpaketen verliert das Effektpigment aufgrund des immer geringeren relativen Aluminiumanteils an Deckvermögen.

Bei einer weiteren erfindungsgemäßen Ausführungsform können sich farblose bzw. Schichten ohne wesentliche Eigenfärbung mit farbigen Schichten abwechseln. Beispielsweise kann es sich um Schichtpakete wie $TiO_2/Fe_2O_3$ handeln, die auf dem naßchemisch oxidiertem Aluminium abgeschieden werden.

Ein weiterer wesentlicher Vorteil der naßchemischen Oxidation von Aluminiumpigmenten zur Erzeugung eines Aluminiumoxides/-hydroxides ist die Tatsache, daß das entstehende Oxid bzw. Oxid/Hydroxid - ganz im Gegensatz zu allen bekannten Verfahren einer Beschichtung - teilweise aus dem Aluminiumkern herauswächst, teilweise jedoch in diesen hineinwächst.

Mithin handelt es sich bei den erfindungsgemäßen Pigmenten nicht um eine Beschichtung durch Auffällung von Aluminiumoxid/-hydroxid, wie es herkömmlicherweise auf Pigmente aufgebracht wird, sondern um die Erzeugung einer Aluminiumoxid/-hydroxidschicht aus und auf dem Aluminiumpigment bzw. Aluminiumlegierungspigment.

Mit dieser reaktionsbedingten Besonderheit ist eine Reihe von Vorteilen verbunden. Zum einen ist hier ein äußerst fester Verbund zwischen Aluminiumoxid und Aluminiumkern gegeben. Damit geht auch eine starke mechanische Beständigkeit auch des fertig beschichteten Effektpigmentes einher, da die weiter aufgebrachte Metallchalkogenidschicht, vorzugsweise Metalloxidsschicht, in die "zerklüftete" oder aufgeraute Oberfläche der Aluminiumoxid/-hydroxidschicht eindringen und dort sicher verankert werden.

Diese Verankerung ist stets stärker als von außen auf nicht gemäß der vorliegenden Erfindung oxidierte Aluminium- bzw- Aluminiumlegierungspigmente aufgefällte Schichten, da bei diesen stets die herstellungsbedingt auf der Aluminium-Oberfläche haftenden Fettsäuren eine natürliche hydrophobe Sperrschicht darstellen, die eine starke Verankerung am Aluminiumkern behindert. Des weiteren lassen sich bei im wesentlichen glatten Aluminiumoberflächen die weiter aufgefällten Beschichtungen sehr viel schlechter verankern als auf der zerklüfteten bzw. aufgerauhten Oberfläche bei den erfindungsgemäß präparierten Aluminium- bzw. Aluminiumlegierungspigmenten.

Ein weiterer Vorteil besteht in der Verringerung der Dicke des Aluminiumkerns durch das hereinwachsende Aluminiumoxid bzw. -hydroxid. Hierdurch wird vor allem das relative Deckvermögen des Effektpigmentes wesentlich erhöht. Für eine gute Deckung ist es beispielsweise ausreichend, wenn der Reflektorkern aus Aluminium oder Aluminiumlegierung im farbigen Effektpigment durchschnittlich nicht mehr als 70 nm, bevorzugt 70 bis 40 nm dick ist, da er auch in diesen Fällen praktisch opak ist. So besitzt der Aluminiumkern der erfindungsgemäßen Effektpigmente im allgemeinen eine mittlere Dicke von 10 bis 250 nm, vorzugsweise von 15 bis 200 nm, bevorzugt von 20 bis 150 nm, weiterhin bevorzugt von 30 bis 100 nm und noch weiter bevorzugt von 40 bis 80 nm.
Durch Steuerung des Oxidationsgrades und durch die Wahl von Aluminiumpigmenten bzw. Aluminiumlegierungspigmenten bestimmter Dicke lassen sich die Eigenschaften des Effektpigmentes gezielt beeinflussen.

Bei ausschließlich naßchemisch aufgefällten Schichten hingegen geht die ursprüngliche Dicke des Aluminiumpigmentes vollständig in das Endprodukt mit ein. Hier wird viel "Aluminiumanteil" und damit Deckvermögen vergeudet.

Ein kritischer Punkt besonders bei mehrschichtigen Effektpigmenten ist die Gesamtschichtdicke des Pigmentes. Die geringere Dicke des Aluminium- bzw. Aluminiumlegierungskernes bei den erfindungsbemäßen Effektpigmenten verringert ebenfalls ihre Gesamtschichtdicke. Hieraus resultiert eine bessere Orientierung und Stapelung der Pigmente im Anwendungsmedium wie beispielsweise einem Lack. So sind beispielsweise erhöhter Glanz, verminderter Grauschleier und bessere Abbildeschärfe (DOI) die Folge.

Die Gesamtschichtdicke der erfindungsgemäßen Effektpigmente beträgt bevorzugt weniger als 900 nm, weiter bevorzugt weniger als 800 nm, noch weiter bevorzugt weniger als 700 nm und weiterhin bevorzugt weniger als 600 nm. Die Gesamtschichtdicke kann beispielsweise 300 nm oder 400 nm betragen.

Der Formfaktor, d.h. der Quotient aus der Länge der Pigmente und ihrer Dicke, beträgt für die erfindungsgemäßen Effektpigmente bevorzugt mehr als 20, weiter bevorzugt mehr als 25, noch weiter bevorzugt mehr als 30 und weiterhin bevorzugt mehr als 40. Die Länge der Pigmente wird hier durch den $d_{50}$-Wert der Summendurchgangsverteilung der Volumenverteilung von Laserbeugungsgrößenbestimmungen repräsentiert. Derartige Größencharakterisierungen plättchenförmiger Effektpigmente sind allgemeiner Stand der Technik und beispielsweise mit Cilas-Geräten der Firma Quantachrome zu realisieren.

Gemäß einer bevorzugten Ausführungsform ist auf der durch naßchemische Oxidation erzeugten Aluminiumoxid/-hydroxidschicht des Aluminiumpigments oder Aluminiumlegierungspigments eine Eisenoxidschicht aufgebracht.

Bei einer weiteren erfindungsgemäßen Weiterbildung wird das naßchemisch oxidierte Aluminiumpigment vor der Beschichtung mit einem hochbrechenden Metallchalkogenid, vorzugsweise Metalloxid, mit einem Brechungsindex > 1,95 zunächst mit einem niedrigbrechenden Oxid versehen. Der Brechungsindex ist vorzugsweise < 1,8. Diese Maßnahme kann beispielweise die Gasungsstabilität des Effektpigmentes erhöhen. Diese könnte unter Umständen in aggressiven Medien wie Wasserlacken aufgrund der hohen Porosität der Aluminiumoxid/-hydroxidschicht von Vorteil sein.

Als geeignete Materialien für eine derartige Beschichtung werden vorzugsweise $SiO_2$, Boroxid, naßchemisch gefälltes Aluminiumoxid oder Mischungen davon verwendet. Diese Oxidschicht mit einem Brechungsindex < 1,8 füllt jedoch vorzugsweise die in der durch naßchemische Oxidation erzeugte Aluminiumoxid/-hydroxidschicht erhaltenen Poren nicht vollständig aus. Vorzugsweise wird diese optionale, zusätzliche Oxidschicht in Mengen von 1 bis 15 Gew.-%, weiter bevorzugt von 2 bis 10 Gew.-% und weiterhin bevorzugt von 3 bis 7 Gew.-%, jeweils bezogen auf das Gewicht des gesamten Effektpigments, aufgebracht. Unterhalb von 1 Gew.-% ist die Beschichtung mit einem Oxid mit einem Brechungsindex < 1,8, beispielsweise hinsichtlich einer Gasungsstabilisierung, nicht wirksam. Oberhalb von 15 Gew.-% wird - nach Auffüllen der Aluminiumoxid- bzw. hydroxidporen - eine dichte homogene, neue Oxidschicht aufgebracht. In Abhängigkeit von der aufgebrachten Menge an niedrigbrechendem Oxid, vorzugsweise $SiO_2$, Boroxid und/oder naßchemisch gefälltem Aluminiumoxid, kann die Mischschicht auch im wesentlichen oder vollständig aus niedrigbrechendem Oxid und der durch naßchemische Oxidation erzeugten Aluminiumoxid/-hydroxidschicht bestehen.

Vorzugsweise bilden die Aluminiumoxid- oder Aluminiumoxid/-hydroxid-haltige Schicht, die Oxidschicht aus einem Material mit einem Brechungsindex < 1,8 und die hochbrechende Metallchalkogenidschicht, vorzugsweise Metalloxidschicht, mit einem Brechungsindex > 1,95 eine gemeinsame Mischschicht, miteinander aus.

Vorzugsweise beträgt die Dicke dieser gemeinsamen Mischschicht mindestens 10 nm.
Weiter bevorzugt beträgt die Dicke der Mischschicht mindestens 20 nm, noch weiter bevorzugt wenigstens 30 nm.

Bei einer weiteren Ausführungsform werden während des Beschichtungsvorganges mit einem Oxid mit einem Brechungsindex < 1,8 Metallchalkogenidpartikel mit einem Brechungsindex > 1,95 hinzugegeben. Die Metallchalkogenidpartikel weisen dabei vorzugsweise eine mittlere Größe auf, die es erlaubt, diese weitgehend in die poröse Aluminiumoxid/-hydroxidschicht einzulagern. Eine mittlere Größe dieser Metallchalkogenidpartikel von unter 40 nm, bevorzugt unter 30 nm, ist bevorzugt. Die Metallchalkogenidpartikel sind bevorzugt nanoskalige Metalloxidteilchen und besonders bevorzugt nanoskalige Eisenoxidteilchen. Auch hier bildet sich eine Mischschicht aus dem Aluminiumoxid/-hydroxid, dem Oxid mit einem Brechungsindex < 1,8 und dem Metallchalkogenid mit einem Brechungsindex > 1,95 aus.

Auf der Metallchalkogenidschicht, Metalloxidschicht, mit einem Brechungsindex > 1,95 kann bei einer weiteren erfindungsgemäßen Ausführung ebenfalls mindestens eine weitere Schicht mit einem Brechungsindex < 1,8 gefällt werden. Diese Schicht kann zusätzlich als weitere Schutzschicht dem farbigen Effektpigment Gasungsstabilität verleihen und somit seinen Einsatz in beispielsweise Wasserbasislacken verbessern. Diese zusätzlich beschichteten Effektpigmente können weiterhin ggfs. mit reaktiven Orientierungsmitteln, wie sie beispielsweise in der **EP 1 084 198** beschrieben sind, die hiermit unter Bezugnahme aufgenommen ist, versehen werden. Hierdurch wird eine bessere Anbindung an das Lacksystem ermöglicht, was beispielsweise bessere Schwitzwasserbeständigkeiten ermöglicht.

Die weitere Schicht mit einem Brechungsindex < 1,8 besteht bevorzugt aus Siliziumdioxid, Aluminiumoxid und/ oder-hydroxid, Boroxid oder Mischungen derselben.

Gemäß einer bevorzugten Weiterbildung der Erfindung wird auf ein naßchemisch oxidiertes Aluminium- oder Aluminiumlegierungspigment zunächst eine Siliziumoxidschicht und nachfolgend eine Eisenoxidschicht aufgebracht.

Das Verfahren zur Herstellung der erfindungsgemäßen Pigmente gliedert sich in zwei Schritte. Zunächst werden in Anlehnung an das gemäß der Lehre der **EP 0 848 735** offenbarte Verfahren die Aluminiumpigmente oxidiert. Die Offenbarung der **EP 0 848 735** wird hiermit unter Bezugnahme aufgenommen.

Zunächst werden Aluminiumpigmente vorzugsweise in einem organischen Lösemittel suspendiert, auf Reaktionstemperatur gebracht und die Oxidationsreaktion wird durch Zugabe von Oxidationsmittel, vorzugsweise von Wasser, und ggf. einem Katalysator gestartet. Durch Variation der Reaktionsdauer, der Reaktionstemperatur und der Menge an Oxidationsmittel, wie beispielsweise Wasser und Katalysator kann der Oxidationsgrad und damit die Oxidschichtdicke der oxidierten Aluminiumpigmente gezielt eingestellt werden.

Vorzugsweise erfolgt die Oxidation der Aluminium- bzw. Aluminiumlegierungspigmente bei pH 7 bis pH 12 in einem Gemisch aus Wasser und einem oder mehreren wassermischbaren organischen Lösungsmitteln. Vorzugsweise beträgt der Wassergehalt des Gemisches 3 bis 60 Gew.-%, weiter bevorzugt 15 bis 55 Gew.-%, jeweils bezogen auf das Gewicht des Gemisches.

Die Wassermenge bezogen auf Aluminium bzw. Aluminiumlegierung beträgt vorzugsweise 10 bis 120 Gew.-%, weiter bevorzugt 15 bis 55 Gew.-%. Liegt der Wert unterhalb von 10 Gew.-%, so ist die Oxidation nur schwach. Liegt der Wert oberhalb von 120 Gew.-%, so kann es zu agglomerierten Pigmenten kommen.

Die Oxidation der Aluminium- bzw. Aluminiumlegierungspigmente wird üblicherweise bei einer zwischen Zimmertemperatur und dem Siedepunkt des Lösungsmittels liegenden Temperatur durchgeführt.

Die Fällung von Metallchalkogenid, vorzugsweise Metalloxid, mit einem Brechungsindex > 1,95 kann vorzugsweise dadurch erfolgen, daß ein Metallsalz in einem überwiegend organischen Medium gelöst wird und vorzugsweise bei einem konstanten pH-Wert und vorzugsweise konstanter Temperatur zu einer Dispersion oder Suspension der oxidierten Aluminiumpigmente in überwiegend organischem Medium zudosiert wird.

Gemäß einer weiteren bevorzugten Weiterbildung der Erfindung wird vor dem Aufbringen einer hochbrechenden Metallchalkogenidschicht, vorzugsweise Metalloxidschicht, mit einem Brechungsindex > 1,95 zunächst eine Oxidschicht mit einem Brechungsindex < 1,8 aufgebracht.

Als Metallsalze kommen die Halogenide, insbesondere die Chloride sowie Nitrate oder Acetate der entsprechenden Metalle in Frage, soweit sie in dem verwendeten überwiegend organischem Medium löslich sind. Möglich ist auch die Verwendung komplexierter Salze. Als Komplexliganden können beispielsweise Acetylacetonate wie $Ti(acac)_4$ verwendet werden.

Der pH-Wert hängt von dem zu fällenden Metallchalkogenid, vorzugsweise Metalloxid, ab und ist von einem Fachmann ohne weiteres zu ermitteln. Bei aufeinanderfolgenden Schichten unterschiedlicher Metallchalkogenide, vorzugsweise Metalloxide, kann der pH-Wert gegebenenfalls vor der jeweiligen Fällung durch Zugabe geeigneter Säuren oder Basen auf einen jeweils gewünschten Wert gebracht werden. Als geeignete Säuren sind insbesondere Mineralsäuren wie HCl oder $H_2SO_4$ zu verstehen. Als Base kann beispielsweise Natronlauge verwendet werden.

Als überwiegend organisches Medium werden bevorzugt Alkohole mit 1 bis 5 C-Atomen sowie Mischungen daraus und Mischungen mit Wasser verwendet.

Vorzugsweise wird das organische Lösungsmittel aus der Gruppe, die aus Alkoholen, Glykolen und Ketonen, vorzugsweise Ethanol, n-Propanol, i-Propanol, n-Butanol, i-Butanol, tert.-Butanol, Methoxypropanol, Aceton, Butylglykol und Gemischen davon besteht, ausgewählt.

Unter einem überwiegend organischen Medium wird ein Lösemittelgemisch mit einem Gehalt an organischem Lösemittel von vorzugsweise insgesamt mehr als 80 Gew.-% verstanden. Der Rest des Lösemittelgemisches besteht im wesentlichen aus Wasser, welches als Reaktionspartner zur Hydrolyse der Metallsalze zu den entsprechenden Metallhydroxiden und/oder -oxiden benötigt wird.

Ein besonderer Vorteil dieses überwiegend organischen Lösemittels ist die Tatsache, daß die oxidierten Aluminiumpigmente selbst bei extremen pH-Werten wie < 3 und > 8 im Vergleich zu einem rein wäßrigen Medium nicht angegriffen werden.

Die der Erfindung zugrundeliegende Aufgabe wird ferner durch Bereitstellung eines Beschichtungsmittels, das erfindungsgemäße Effektpigmente enthält, gelöst.

Vorzugsweise wird das Beschichtungsmittel aus der Gruppe, die aus Coatings, Lacken, Automobillacken, Druckfarben, Tinten, Kunststoffen, Gläsern, Keramiken oder kosmetischen Zubereitungen besteht, ausgewählt. Gemäß einer bevorzugten Weiterbildung ist die kosmetische Zubereitung ein Nagellack.

Das erfindungsgemäße Beschichtungsmittel kann des weiteren die für die jeweilige Verwendung üblichen Zusatzstoffe wie beispielsweise ein oder mehrere filmbildende Mittel, ein oder mehrere Lösemittel, etc. enthalten.

Die Erfindung wird nunmehr anhand der nachfolgenden Beispiele und beigefügten Figuren veranschaulicht, ohne den Schutzumfang der Ansprüche zu beschränken.

**Figuren**

Fig. 1 zeigt eine REM-Aufnahme eines Querschliffs eines gemäß dem erfindungsgemäßen Beispiel 3 hergestellten Pigments. Zu erkennen ist die Mischschicht aus Eisenoxid (hell) und Aluminiumoxid/-hydroxid (dunkel).

Fig.2 zeigt eine REM-Aufnahme eines Querschliffs eines Pigments gemäß Vergleichsbeispiel 8. Hier ist keine Mischschicht aus Eisenoxid (hell) und Siliziumdioxid zu erkennen (dunkel), sondern eine scharfe Grenze zwischen Eisenoxid und Siliziumdioxid.

Fig. 3 zeigt Helligkeitsdifferenzen von Applikationen erfindungsgemäßer Beispiele und Vergleichsbeispiele nach Belastung durch Scherkräfte (Vl/aring-Blendortest).

Fig. 4 zeigt das farbmetrisch ermittelte Deckvermögen (Quotient der Helligkeit dunkel/hell bei 110° Meßwinkel) von Rakelabzügen erfindungsgemäßer Beispiele und Vergleichsbeispiele als Funktion der Pigmentierungshöhe in Gew.-%.

Fig. 5 zeigt das farbmetrisch ermittelte Deckvermögen (Quotient der Helligkeit dunkel/hell bei 110° Meßwinkel) von Rakelabzügen der erfindungsgemäßen Beispiele und Vergleichsbeispiele aus Fig. 4 als Funktion des flächenbezogenen Deckvermögens D.

Fig. 6 zeigt die farbmetrisch ermittelten a*b*-Werte des CieLab-Systems (Effektlinien) erfindungsgemäßer Beispiele und Vergleichsbeispiele bei sieben verschiedenen Beobachtungswinkeln (15°, 20°; 25°, 45°, 70°, 75°, 110°) bei konstantem Beleuchtungswinkel von 45°, die unter Verwendung eines Goniospektralphotometer der Fa. Optronic Multiflash, Berlin, Deutschland, erhalten wurden.

Fig. 7 zeigt zusätzlich einen Auftrag der a* gegen die b*-Farbwerte bei drei verschiedenen Einfallswinkeln und jeweils zwei Beobachtungswinkeln (+/- 15° bezogen auf den Glanzwinkel). Diese als "Effektanker" bezeichneten Werte (25°/170°; 25°/140°; 45°/150°; 45°/120°; 75°/120°; 75°/90°), (Einfallswinkel/Beobachtungswinkel) sind ebenfalls auf die Oberflächenebene bezogen und mit dem Meßgerät: Goniospektralphotometer Multi FX10 der Fa. Datacolor gemessen.

**Erfindungsgemäße Beispiele 1 - 5 und 12 - 14:**

Oxidation: Die Erzeugung der Aluminiumoxid/hydroxid-Schicht erfolgte gemäß dem in der EP 0 848 735 offenbarten Verfahren.

In einem Planschliffreaktionsgefäß ausreichender Größe wurden 100 g Aluminiumpigment in Form einer Paste mit 240 g lsopropanol vorgelegt und 10 min dispergiert. Anschließend wurde ein Gemisch aus VE-Wasser (vollentsalztem Wasser) und Base (Mengen siehe Tab.1) in das Gefäß gegeben. Die Suspension wurde bis kurz vor den Siedepunkt erhitzt. Nach 7h Heizzeit ließ man die Suspension abkühlen. 16h später wurde das Gemenge über einen Büchner Trichter abgesaugt und der Filterkuchen in einem Vakuumtrockenschrank bei 100°C 6h unter $N_2$-Spülung getrocknet.

Eisenoxidbeschichtung:

Das oxidierte Aluminiumpigment wurde mit techn. Ethanol in ein 3L Planschliffreaktionsgefäß gegeben und dispergiert. Die verwendeten Mengen sind in Tab. 1 angegeben. Um bei größeren Ansätzen auf die entsprechenden Mengen zu kommen, wurden mehrere Einzelansätze des oxidierten Aluminiumpigmentes miteinander vermischt. Die Suspension wurde anschließend auf 60°C erhitzt und mit wässriger HCl (Gehalt HCl = 18 Gew.-%) auf einen pH-Wert von 6,2 eingestellt. Nun wurde mit der kontinuierlichen Zugabe einer alkoholischen $FeCl_3$-Lsg. (Gehalt ($FeCl_3 x 6H_2O$) = 40 Gew.-%) begonnen (Mengen siehe Tab. 1). Durch Zudosieren von alkoholischer Natronlauge wurde der pH-Wert konstant bei 6,2 gehalten. Nach Ende der Zudosierung saugte man im heißen Zustand die Suspension über einen Büchner Trichter ab und wusch den Filterkuchen mehrmals mit einem Alkohol/Wassergemisch. Der Filterkuchen wurde bei 100°C für 6h im Vakuumtrockenschrank unter $N_2$-Spülung getrocknet.

**Vergleichsbeispiel 6: Aluminiumoxid naßchemisch gefällt**

45 g Al-tri-isopropylat und 250 g Isopropanol wurden in einem 1 L Reaktor vorgelegt, dispergiert und bei 83°C Vorlauftemperatur unter Rühren gelöst. 160 g handelsübliches Mex 2154 (Fa. Eckart, Fürth, Deutschland) wurden zugeben und mit einer Lösung aus organischer Base und Isopropanol nachgespült. Nach 1 h Dispersionszeit ließ man ganz langsam ein Gemisch aus 5,5% org. Base und 94,5% VE-Wasser im stöchiometrischen Verhältnis zutropfen. Nach 7-stündiger Heizzeit wurde die Suspension für 16h nachgerührt, dann abgenutscht und der Filterkuchen bei 100°C im VTS getrocknet.

**Vergleichsbeispiel 7:**

Das oxidierte Aluminiumpigment aus Beispiel 1 ohne weitere Eisenoxidbeschichtung.

**Vergleichsbeispiel 8 + 9:**

Die marktgängigen Produkte Variocrom® M-red und Variocrom® M-gold (BASF, Ludwigshafen, Deutschland)

**Vergleichsbeispiel 10+11:**

Die marktgängigen Produkte Paliocrom® L2000 und Paliocrom® L2800 (BASF, Ludwigshafen, Deutschland) Analytische Daten sowie Glanzwerte von Rakelabzügen der Beispiele und Vergleichsbeispiele sind in Tabelle 2 angegeben.

**Vergleichsbeispiel 15:**

Aluminiumpulver E900 (Fa. Eckart, Fürth, Deutschland): Sehr feines im Handel erhältliches Aluminiumpulver.

**Tab. 1:** Reaktionsparameter zur Herstellung der erfindungsgemäßen Beispiele 1 - 5 und 12 -14.

| Beispiele | Herstellung der Aluminiumoxidschicht nach EP 0 848 735 | | | | Herstellung $Fe_2O_3$-Schicht | | |
|---|---|---|---|---|---|---|---|
| | Ausgangsmaterial | Wasser [g] | Base | Menge Base [g] | Menge oxidiertes Aluminium [g] | Menge Lösemittel (Ethanol) [g] | Volumen zudosierte $FeCl_3$-Lsg. [ml] |
| 1 | MEX 2154 (Eckart) | 40 | Butylamin | 3,0 | 100 | 900 | 250 |
| 2 | MEX 2154 (Eckart) | 40 | EDA | 2,3 | 100 | 900 | 312,5 |
| 3 | MEX 2154 (Eckart) | 100 | Butylamin | 4,5 | 100 | 1.250 | 587 |
| 4 | MEX 2154 (Eckart) | 100 | Butylamin | 4,0 | 100 | 900 | 240 |
| 5 | VP 57900 (Eckart) | 60 | EDA | 2,5 | 45 | 855 | 250 |
| 12 | MEX 2154 (Eckart) | 40 | Butylamin | 3,0 | 200 | 1.000 | 350 |
| 13 | MEX 2154 (Eckart) | 100 | Butylamin | 4,5 | 167 | 835 | 353 |
| 14 | MEX 2154 (Eckart) | 40 | Butylamin | 3,0 | 600 | 1.500 | 600 |

EP 1 685 198 B1

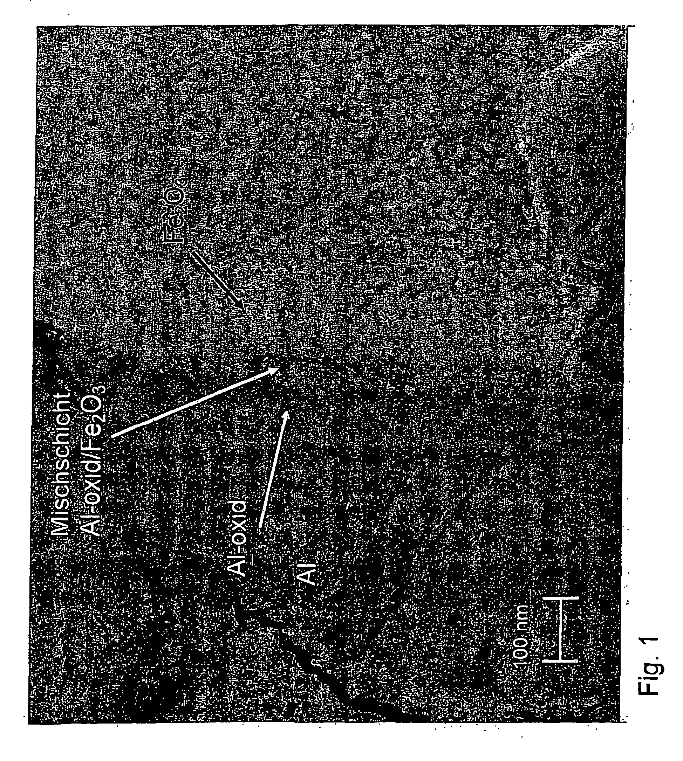

In Fig. 1 ist eine REM-Aufnahme eines Querschliffes der erfindungsgemäßen Pigmente gezeigt (aus Beispiel 3). Das Pigment ist unter einem extrem flachen Winkel vermessen worden. Dadurch ist die Grenzfläche sehr gut aufgelöst. Die Aluminiumoxid/-hydroxid Phase ist als dunkler Kontrast zur reinen Aluminiumphase zu erkennen, während Eisenoxid einen hellen Kontrast erzeugt. Die Eisenoxidschicht besitzt eine ausgeprägt partikuläre Struktur. An der Phasengrenze Eisenoxid/Aluminiumoxid ist deutlich eine Mischschicht zu erkennen. Kleine Eisenoxidpartikel sind erkennbar in die poröse Aluminiumoxidschicht eingelagert worden.

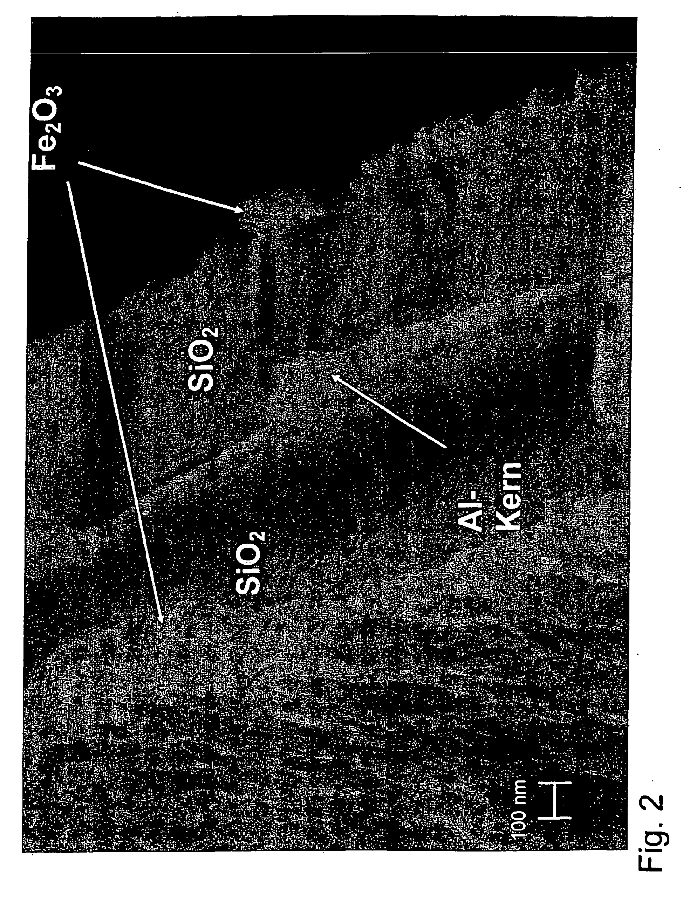

In Fig. 2 ist eine ähnliche Aufnahme eines Pigmentes gemäß Vergleichsbeispiel 8 gezeigt. Hier erkennt man in jeder Beziehung sehr homogene, gleichmäßige und voneinander getrennte Schichten. Eine Mischschicht aus Eisenoxid und der $SiO_2$-Schicht ist nicht zu erkennen.

Tabelle 2:

| Produkt | Cilas $D_{50}$ [μm] | BET [$m^2$/g] | akt. Al-Gehalt [%] | Fe-Gehalt [%] | Si-Gehalt [%] | Dichte [g/$cm^3$] | Glanz* [60°] |
|---|---|---|---|---|---|---|---|
| Erfindungsgem. Beispiel 1 | 22,0 | 55,8 | 48,3 | 12,1 | / | 2,9 | 23,3 |
| Erfindungsgem. Beispiel 2 | 19,7 | 56,7 | 45,5 | | / | 3,2 | 19,3 |
| Erfindungsgem. Beispiel 4 | 26,2 | 67,1 | 33,3 | 18,7 | / | 3,4 | 18,3 |
| Erfindungsgem. Beispiel 5 | 20,2 | 42,0 | 20,0 | 43,0 | / | 3,4 | 16,3 |
| Vergleichsbeispiel 6 (Al-oxid gefällt) | 21,5 | 86,7 | 69,3 | <0,5 | / | 3,2 | 29,8 |
| Vergleichsbeispiel 7 (Aloxal® 3010) | 23,2 | 79,6 | 63,2 | <0,5 | / | 2,5 | 26,7 |
| Vergleichsbeispiel 8 (Variocrom® M-red) | 14,6 | 1,0 | 32,8[1] | 9,8 | 27,2 | 2,5 | 11,2 |
| Vergleichsbeispiel 9 (Variocrom® M-gold) | 16,5 | 1,1 | 29,4[1] | 6,3 | 28,8 | 2,3 | 12,9 |
| Vergleichsbeispiel 10 (Paliocrom® L 2000) | 25,6 | 3,1 | 67,6 | 15,2 | / | 3,0 | 17,7 |
| Vergleichsbeispiel 11 (Paliocrom® L 2800) | 20,9 | 1,8 | 59,4 | 19,0 | / | 3,1 | 16,2 |
| * bei 10% Pigmentierungshöhe, deckend [1] errechnete Werte für die Stöchiometrien $SiO_2$ und $Fe_2O_3$ | | | | | | | |

Daten zur näheren Charakterisierung der Effektpigmente sind in Tabelle 2 aufgeführt. Sie umfassen Pigmentcharakteristika wie den Median der Größenverteilung, die spezifische Oberfläche, die Dichte und die analytische Zusammensetzung aus der Elementanalyse. Zur Bestimmung der spez. Oberfläche nach BET wurde das jeweils getrocknete Pigment bei 2h lang bei 300°C ausgeheizt und anschließend der Bestimmung, welche mittels flüssigem Stickstoff erfolgte, zugeführt. Als Messgerät diente hierbei der Typ: Genimi der Fa.
Micromeritics; D-41238 Mönchengladbach, Deutschland.
Ebenfalls sind in der Tabelle die Glanzwerte, die an Rakelabzügen (s. unten) gemessen wurden, aufgelistet. Es ist zu erkennen, daß vor allem die Variocrom®-Pigmente, die eine kleine Korngrößenverteilung und aufgrund ihres hohen $SiO_2$-Gehaltes eine sehr hohe Dicke aufweisen, deutlich die schlechtesten Glanzeigenschaften haben. Die erfindungsgemäßen Beispiele 1-5 zeigen gegenüber dem Vergleichsbeispiel 7 (oxidiertes Aluminiumpigment ohne $Fe_2O_3$-Beschichtung) oder Vergleichsbeispiel 6 aufgrund der zusätzlichen Eisenoxidschicht verringerten Glanz. Jedoch ist deren Glanz höher als die nur mit Eisenoxid beschichteten Paliocrom®-Produkte und deutlich höher als die Variocrom®-Produkte.
Mit einigen der Beispiele wurden verschiedene Tests durchgeführt, die im folgenden beschrieben sind.

**Waring Blendor Test:**

In der Industrie werden viele Lacke in Kreislaufsystemen verarbeitet. Hierbei werden die Lackkomponenten hohen Scherkräften ausgesetzt.Der Waring Blendor Test simuliert nun diese Bedingungen und dient zur Feststellung der Ringleitungs- bzw. der Scherstabilität.

Gerade Pigmente, deren Beschichtung nicht ausreichend auf dem Trägermaterial verankert ist, zeigen bei diesem Test starke Abweichungen der Helligkeitswerte zu den unbehandelten Applikationen. Der Waring Blendor Test kann somit als Maß für die Zwischenhaftung der einzelnen Beschichtungen gegenüber Scherkräften verstanden werden.

Durchführung:

Die Pigmentpaste wurde eingewogen und schrittweise mit einem konventionellen Naßlack auf Basis hydroxyfunktioneller Acrylate in einem 880 mL Becher angeteigt. Danach wurde die Viskosität mit Butylacetat / Xylol 1:1 auf 17" im DIN 4 mm-Becher eingestellt. Es wurden insgesamt 600g Lack hergestellt, wovon 400 g in ein doppelwandiges 1 kg-Gefäß mit Wasserkühlung eingefüllt und unter dem Dispermaten (Fa. Waring Blendor) mit einem speziellen Aufsatz verrührt wurden. Die Rührzeit betrug 8 Minuten bei 13.500 U/Min, dann wurden 200g Lack entnommen und der Rest wurde weitere 12 Minuten gerührt.

Ansatz:  6 % Pulver (Pigment)
8 % Butylacetat 85
86 % CSR-Lack, farblos
30 % Verdünnung Butylacetat 85 / Xylol 1:1

Jeweils 200g des unbehandelten und der behandelten Lacke wurden dann mit einem Spritzautomaten und der Spritzpistole LP-90 (beides Fa. Languth, Deutschland) nach folgender Einstellung appliziert.

Einstellung:  Nadel: 1.3.4
Druck: 4 bar

Gänge:  Die Zahl der Spritzgänge wurde so gewählt, dass eine trockene Lackschichtdicke von 15-20 $\mu$m vorlag.

Konventionsweise gelten Effektpigmente als scherstabil, wenn in der Applikation nach dem Waring-Blendortest die Helligkeitsdifferenz $\Delta E^*$ zur unbehandelten Probe kleiner 1 ist. Dies sollte für alle Messwinkel zutreffen.

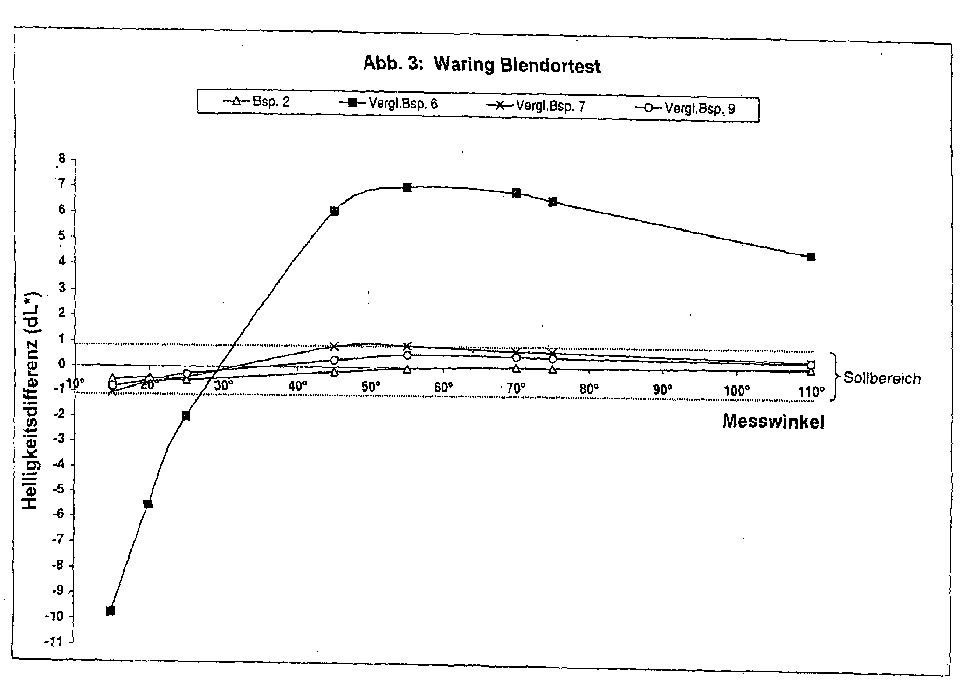

In Fig. 3 sind die Helligkeitsdifferenzen der Prüfbleche, auf die die hergestellten Lackproben appliziert wurden, einiger Beispiele gegen die einzelnen Messwinkel nach einer Behandlung von 20 Minuten aufgetragen.

Das Prüfblech des Vergleichsbeispiels 6, bei welchem Aluminiumoxid naßchemisch abgeschieden wurde, wies sehr hohe Helligkeitsdifferenzen auf. Hier wurde das Pigment stark geschädigt. Im Gegensatz dazu erfüllten die Prüfbleche der Vergleichsbeispiele 7 (oxidiertes Pigment ohne Eisenoxid, Aloxal® 3010) und 9 sowie das erfindungsgemäße Beispiel 2 die Kriterien des Tests. Auch Variocrom® Magic Red (BASF) bestand den Test. Erkennbar führte die naßchemische Oxidation des Aluminiums zu einer hervorragenden Haftung des Oxids auf dem Aluminiumkern, die auch nach weiterer Beschichtung mit Eisenoxid erhalten blieb. Eine lediglich naßchemisch gefällte Aluminiumoxidschicht hingegen wies keine gute Haftung auf (siehe Vergleichsbeispiel 6). Auch war bereits bei der Herstellung des Vergleichsbeispiels 6 zu beobachten, das die Eisenoxidschicht schlecht haftete und viele Nebenfällungen erzeugt wurden.

Deckun-gsvergleich:

Das jeweilige Pigment wurde in verschiedenen Pigmentierungshöhen (Gew.-% Pigment, bezogen auf das Gesamtgewichtes des Naßlacks) im Bereich von 1-10% in jeweils 10 g eines konventionellen Nitrocelluloselackes (Dr. Renger Erco Bronzemischlack 2615e; Fa. Morton) eingerührt. Dabei wurde das Effektpigment vorgelegt und anschließend mit einem Pinsel in den Lack dispergiert.

Der fertige Lack wurde auf einem Rakelabzugsgerät mit einer Nassfilmdicke von 50 $\mu$m auf Prüfkarten Nr. 2853 der Fa. Byk Gardner (Kontrastpapier) appliziert.

Bei sämtlichen Pigmentierungshöhen wurden die Lackapplikationen auf schwarzem und weißem Hintergrund mit einem Goniospektralphotometer der Fa. Optronic Multiflash, Berlin, Deutschland bei einem Meßwinkel von 110° relativ zum Glanzwinkel vermessen.

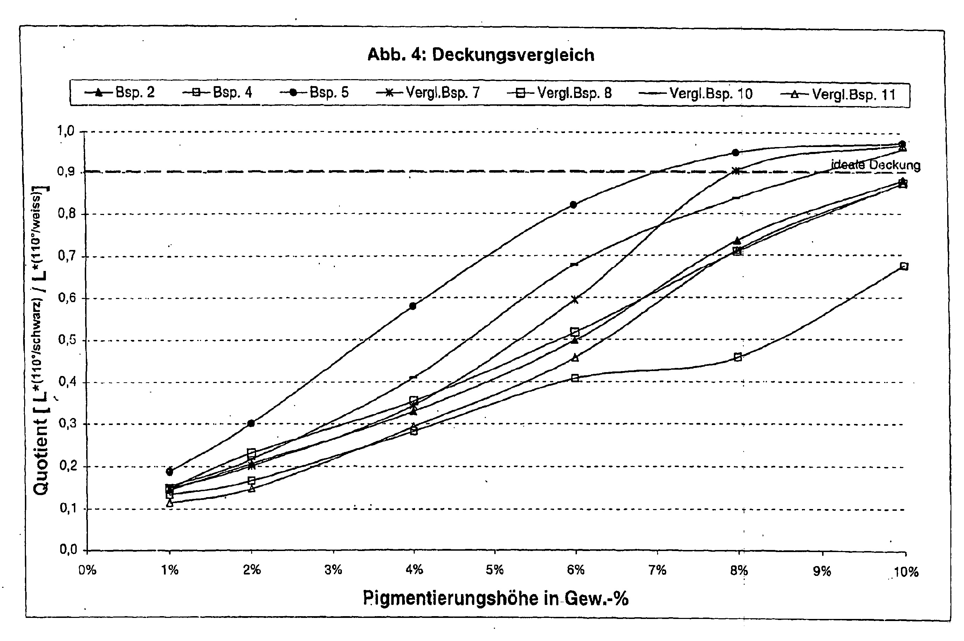

Der Quotient der Helligkeitswerte von schwarzem zu weißem Hintergrund wurde gegen die Pigmentierungshöhe in Gew.-% aufgetragen (Fig.4). Als Deckungskriterium ist ein Wert größer 0,98 im Schrifttum für Aluminiumpigmente üblich, wie beispielsweise erwähnt in der EP 0 451 785. Aluminiumpigmente weisen aufgrund ihrer völligen Opazität für sichtbares Licht und ihrer planparallelen Orientierung im Lack ein hervorragendes Deckvermögen auf.

Die erfindungsgemäßen mehrfach beschichteten Effektpigmente, die wie auch ähnliche Effektpigmente aus dem Stand der Technik einen mindestens fünfschichtigen Aufbau hatten, wiesen naturgemäß aufgrund ihres relativ geringen Aluminiumanteils eine im Vergleich zu reinen Aluminiumpigmenten schlechtere Deckung auf. Daher kann für diesen Typ von Effektpigmenten bereits bei einem Quotienten von 0,9 von einer guten Deckung ausgegangen werden.

Fig. 4 ist zu entnehmen, daß das beste spezifische Deckvermögen von dem Pigment des erfindungsgemäßen Beispiels 5 und den Vergleichsbeispielen 7 und 10, die als dreischichtige Pigmente nur jeweils eine Beschichtung aufweisen, erreicht wurde. Im erfindungsgemäßen Beispiel 5 wurde als Ausgangsmaterial ein extrem dünnes Aluminiumpigment (Dicke nur ca. 110 nm) verwendet. Aus diesem Grund ist das Deckvermögen des beschichteten Pigmentes trotz eines äußerst geringen Aluminiumgehaltes (von nur 20 Gew.-%) ebenfalls hervorragend.

Das spezifische Deckvermögen des 5-schichtigen Effektpigmentes Variocrom® Magic Red (Vergleichsbeispiel 8) ist trotz des sehr niedrigen Metallgehaltes und der sehr dicken $SiO_2$-Schichten vergleichbar mit derjenigen der erfindungsgemäßen Pigmente. Der Grund liegt hier in der geringeren Korngröße dieser Pigmente. Von Metallpigmenten ist bekannt, daß sie mit abnehmender Korngröße aufgrund des höheren Streuanteils an den Kanten besser decken. Eine unmittelbare Folge der kleineren Korngröße ist jedoch ein schlechteres Glanzverhalten dieser Pigmente, wie Tab. 3 zu entnehmen ist. Um den Effekt der unterschiedlichen Korngröße weitgehend zu eliminieren, kann man folgendermaßen ein flächenbezogenes Deckvermögen D definieren:

$$D = \frac{Dichte \times Medianwert}{Einwaage} = \frac{\frac{m}{V} \times d_{50}}{m} = \frac{d_{50}}{V}$$

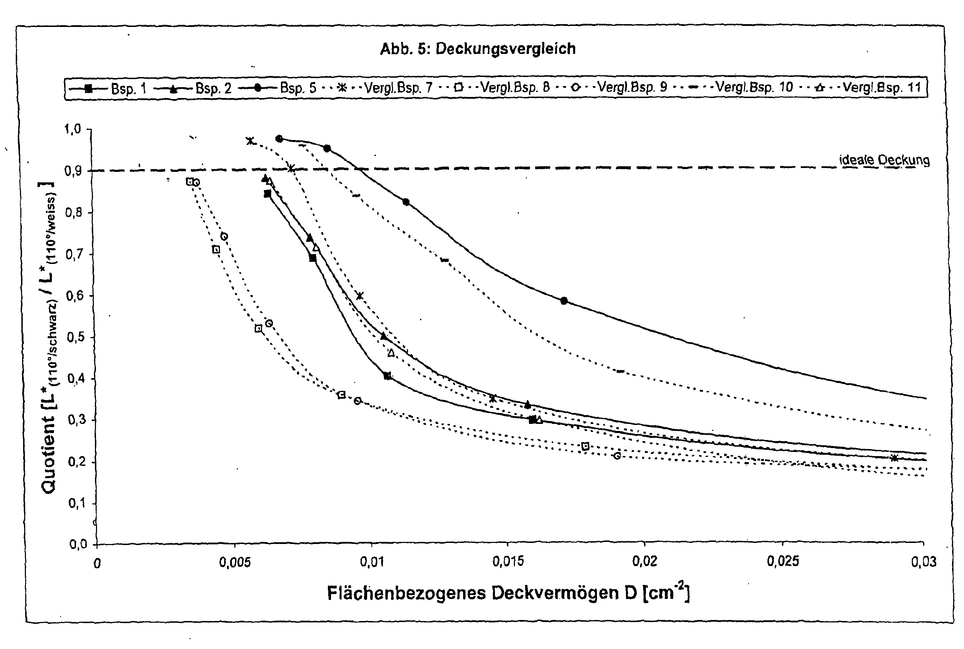

In Fig. 5 ist der Quotient der $L^{*}_{110*}$-Werte gegen die Größe D für die verschiedenen Einwaagen aufgetragen. Hier ist nun deutlich das schlechtere Deckvermögen der Variocrom®-Pigmente zu erkennen.

Die Kurven lassen sich auf den Quotienten 0,9 extrapolieren. Für diesen Wert läßt sich nach obiger Formel die jeweils notwendige Einwaage an Pigmentfläche berechnen, die zum Erreichen eines ausreichenden Deckvermögens notwendig ist. Diese Werte sowie das spezifische Deckvermögen sind in der Tabelle 3 aufgeführt. Außerdem sind zum Vergleich Glanzwerte, gemessen bei einer Pigmentierungshöhe von 10%, aufgeführt.

Aus Tab. 3 geht hervor, dass die erfindungsgemäßen Beispiele 1 und 2 sich in ihrem Deckvermögen ähnlich den Paliocrom®-Beispielen (Vergleichsbeispiele 10 und 11) verhalten, jedoch höhere Glanzwerte besitzen. Das erfindungsgemäße Beispiel 4 besitzt ein geringeres Deckvermögen, jedoch gute Glanzwerte. Der Vorteil der erfindungsgemäßen Effektpigmente liegt hier insbesondere in den optischen Eigenschaften. Sie weisen leichte, dezente Farbflops auf, die bei den farbstarken Paliocrom®-Produkten völlig fehlen. Von den erfindungsgemäßen Effektpigmenten hatte das Effektpigment des Beispiels 4 relativ betrachtet den stärksten Farbflop.

Die Variocrom® Produkte hingegen (Vergleichsbeispiele 8 und 9) weisen starke Farbflops auf. Das spezifische Deckvermögen ist vergleichbar mit den erfindungsgemäßen Beispielen 1 und 2, jedoch ist das flächenbezogene Deckvermögen geringer. Insbesondere ist der Glanz von Rakelabzügen mit diesen Vergleichs-Pigmenten deutlich schwächer. Dies ist eine Folge des geringen Formfaktors dieser Pigmente. Der Formfaktor ist klein, da sowohl die Längsausdehnung gering als auch die Gesamtdicke der Pigmente hoch ist. Die Dicke beträgt ca. 800 - 1.000 nm, was zu einen Formfaktor unter 25 führt.

Die Deckungseigenschaften der Pigmente des erfindungsgemäßen Beispiels 5 (5-Schichtpigment) sind sogar besser als jene der 3-Schichtpigmente Paliocrom® L 2800 oder von Aloxal® 3010. Das hierbei zur Oxidation verwendete Aluminiumpigment hatte eine mittlere Ausgangsdicke von nur ca. 110 nm. Die effektive Dicke des oxidierten und mit Eisenoxid belegten Pigmentes ist vergleichbar mit der eines herkömmlichen Aluminiumpigmentes wie z.B. Mex 2154, d.h. 300 - 400 nm.

Die Vorteile der erfindungsgemäßen Effektpigmente ergeben sich daher in der Summe verschiedener Eigenschaften. Die erfindungsgemäßen Pigmente weisen ein gutes Deckvermögen, eine gute mechanische und chemische Stabilität sowie einen hohen Glanz und leichte, dezente Farbflops auf. Keines der Vergleichspigmente weist in der Gesamtbetrachtung die genannten Eigenschaften sämtlich in zufriedenstellender Weise auf.

**Tabelle 3: Farbmetrische Eigenschaften und Deckvermögensparameter bei L\*$_{110*,weiß}$/L\*$_{110*,schwarz}$ = 0,9 im Überblick**

| Muster | Medianwert d$_{50}$ [μm] | Deckvermögen | | Farbmetrik, Koloristik | |
|---|---|---|---|---|---|
| | | Pigmentierungs-Höhe** [Gew.%] | Flächenbezogenes Deckvermögen D** [x10$^3$ cm$^{-2}$] | Glanz 60°* | Subjektiver Eindruck |
| Beispiel 1 | 22,0 | 10,5 | 5,9 | 23,3 | Kräftig Gold, kippt ohne wesentlichen Farbflop ins Unbunte ab |
| Beispiel 2 | 19,7 | 10,5 | 6,1 | 19,3 | Kupferfarben, kippt ohne wesentlichen Farbflop ins Unbunte ab |
| Beispiel 4 | 26,2 | 11,5 | --- | 18,3 | schwacher Farbflop von Zitronengold ins Rötliche |
| Beispiel 5 | 20,2 | 7,0 | 9,7 | 16,3 | Dukatengold, leichter Farbflop |
| Vergl. Beispiel 7 (Aloxal 3010) | 23,2 | 8,0 | 7,2 | 26,7 | Champagnerfarben, metallisch, ohne Farbflop |
| Vergl. Beispiel 8 (Variocrom M-red) | 14,6 | 10,5 | 3,6 | 11,2 | Sehr starker Farbflop von Rosarot nach Gold |
| Vergl. Beispiel 9 (Variocrom M-gold) | 16,5 | 10,5 | 3,5 | 12,9 | Sehr starker Farbflop von Grüngold nach Ockergelb |
| Vergl. Beispiel 10 (Paliocrom L 2000) | 25,6 | 6,5 | 8,5 | 17,7 | Ockergelb, metallisch ohne Farbflop |
| Vergl. Beispiel 11 (Paliocrom L 2800) | 20,9 | 10,5 | 6,3 | 16,2 | Orange, metallisch ohne Farbflop |
| * bei 10% Pigmentierungsnone ** bei Deckungsquotienten 0,9 | | | | | |

Eigenschaften des Farbflops:

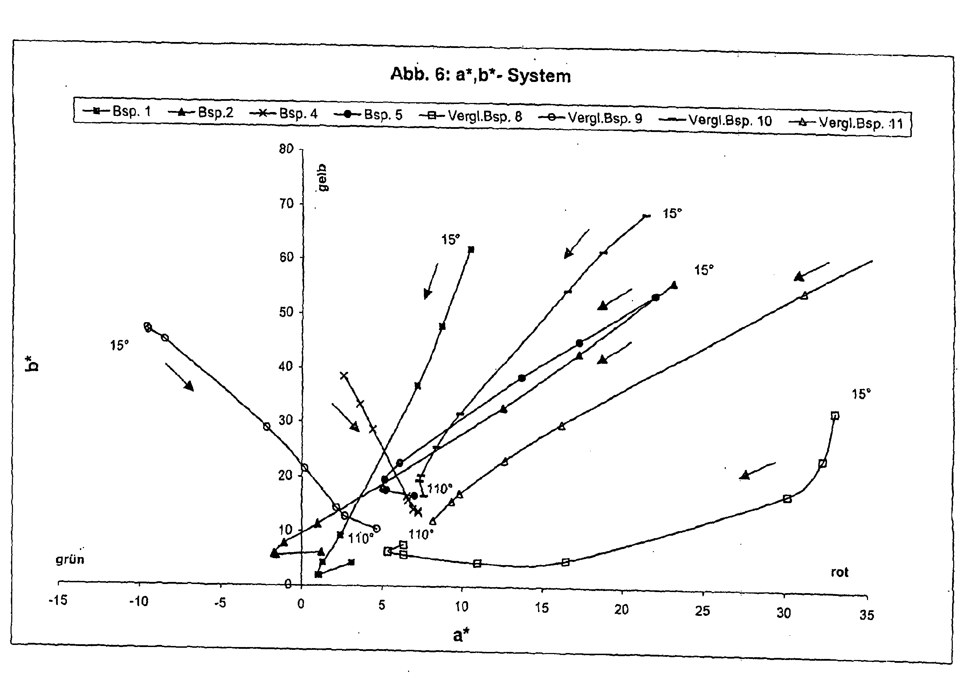

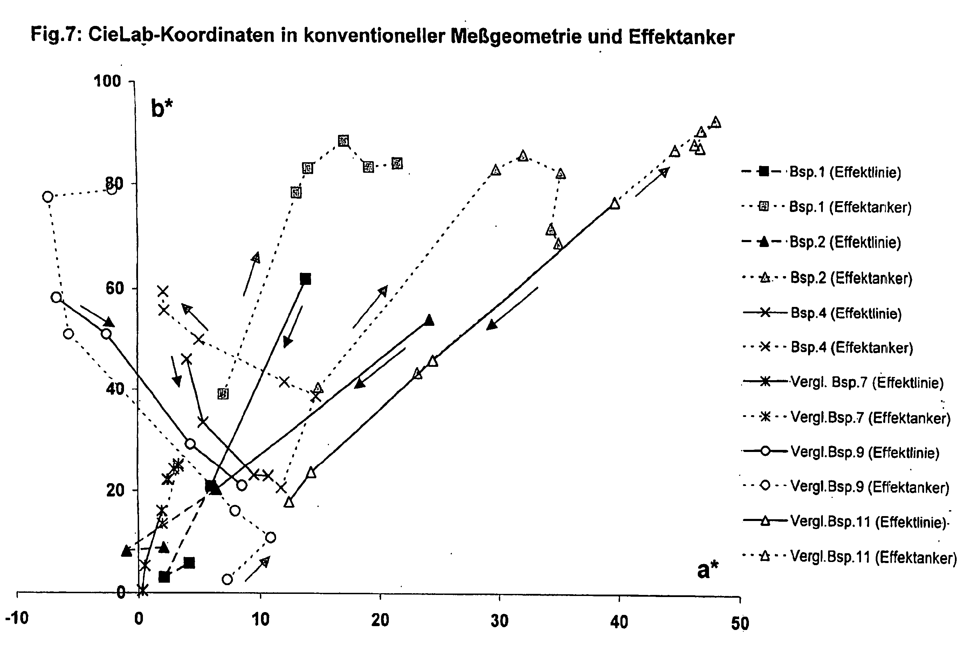

Zum Vergleich der farbmetrischen Eigenschaften wurden die unter "Deckungsvergleich" beschriebenen Nasslackapplikationen herangezogen. Selbstverständlich wurden hierbei die Applikationen der nicht scherbelasteten Proben verwendet. Die Messungen erfolgten für Fig. 6 mit einem Goniospektralphotometer der Fa. Optronic Multiflash, Berlin und für Fig. 7 mit einem Goniospektralphotometer Multi FX10 der Fa. Datacolor mit Sitz in D-45768 Marl, Deutschland.

Bislang wurden herkömmliche Autolacksysteme bei einem konstanten Einstrahlwinkel von 45° und bei verschiedenen Messwinkeln, beispielsweise bei 15°, 20°, 25°, 45°, 70°, 75° und 110°, relativ zum Glanzwinkel gemessen. Diese Messungen ergeben die Glanz- oder Effektlinie, erfassen aber nur einen kleinen Teil des Farbbereiches den moderne Interferenzpigmente einnehmen können. Es läßt sich hiermit der Hell-Dunkel-Flop von konventionellen Metallpigmenten farbmetrisch recht gut charakterisieren.

Ein Hauptmerkmal moderner Interferenzpigmente jedoch ist die Abhängigkeit der Farbe vom Einfallswinkel des Lichtes. Jedoch lässt nur eine Änderung des Beleuchtungswinkels eine ausreichende Beschreibung dieser Pigmente zu. Messungen mit unterschiedlichen Beleuchtungswinkeln und konstantem Differenzwinkel (z.B. 15°) zum jeweiligen Glanzwinkel führen im a*b*-System zur so genannten Interferenzlinie oder dem Interferenzanker. Sie ist charakteristisch für jedes Interferenzpigment. Zur weiteren Beschreibung sei hier auf die Schrift W.R. Cramer und P.W. Gabel, *farbe+ lack* **109** (2003) 78 verwiesen.

Für eine ausreichende Beurteilung genügen die drei Beleuchtungswinkel 25°, 45° und 75° sowie die um jeweils +/- 15° zum jeweiligen Glanzwinkel verschobenen Differenzwinkel.

Dies bedeutet, dass bei einem Beleuchtungswinkel von 45° der zugehörige Glanzwinkel 135° beträgt. Zu diesem Glanzwinkel gehören zwei Differenzwinkel von jeweils +15° und -15° und somit die entsprechenden Beobachtungswinkel von 120° und 150°. Bezugspunkt ist hierbei jeweils die Probenhorizontale und nicht die Normale.

In Fig. 6 wurden die a*- gegen b*-Werte sämtlicher vier Winkelpaare (45°/110°; 45°/90°; 45°/60°; 45°/25°) mit (Beleuchtungswinkel/Messwinkel) aus dem L*a*b*-System gegeneinander aufgetragen, welche die Effektlinie darstellen. Bei der Betrachtung der Effektlinie ist bei allen Pigmenten mit zunehmendem Messwinkel eine Farbverschiebung ins Unbunte (Nullpunkt) zu erkennen, der bei den erfindungsgemäßen Pigmenten, bes. bei Bsp.1 wesentlich stärker ausgeprägt ist.

Die erfindungsgemäßen Beispiele lassen eine Verschiebung bei sehr stumpfem Beobachtungswinkel in den Rotbereich beobachten. Dies macht sich in der Fig. 6 bei den erfindungsgemäßen Beispielen 1, 2 und 5 charakteristisch als "Häkchen" erkennbar. Derartige Farbortwechsel wurden für die Paliocrom®-Produkte (Vergleichsbeispiele 10 und 11) nicht erhalten. Deutlich stärker ausgeprägt sind die Farbortwechsel jedoch für die beiden Variocrom® Beispiele (Vergleichsbeispiele 8 und 9).

Weiterhin wurden zur besseren Darstellung des Farbflops unter der Bezeichnung "Effektanker" zusätzlich in Fig. 7 die a*,b* Farbwerte gegeneinander für die jeweiligen Winkelpaare (25°/170°; 25°/140°; 45°/150°; 45°/120°; 75°/120°; 75°/90°) (Beleuchtungswinkel/Messwinkel) aufgetragen.

Typischerweise steht der Effektanker bei interferierenden Pigmenten nahezu waagerecht auf der jeweiligen Effektlinie. Die Größe dieses Effektankers stellt nun ein Maß für den Farbflop dar.

In Fig.7 lässt sich nun schön erkennen, dass das Paliocrom®-Produkt (Vergleichsbeispiel 11) keinen solchen Anker ausbildet. Vielmehr stellt der Effektanker eine Verlängerung der Effektlinie dar. Ein Farbflop ist somit faktisch nicht vorhanden.

Anders die erfindungsgemäßen Pigmente unter Bsp. 1, 2 und 4. Der Effektanker verteilt sich hier im mittleren Maße im Farbraum, weshalb man hier von einem schwachen, dezenten Farbflop sprechen kann.

Die mit Abstand stärksten Änderungen des Farbortes bei verschiedenen Betrachtungswinkeln weist jedoch das Variocrom®-Vergleichsbeispiel 9 auf. Der Effektanker ist stark ausgeprägt und durchzieht in hohem Maße den Farbraum, was von einem unabhängigen Betrachter als starker Farbflop empfunden wird.

Quantitativ wird im Rahmen dieser Erfindung der Farbflop $\Delta H^*_{Anker}$ als maximale Differenz der einzelnen $H^*_{Anker}$ Werte der fünf Ankerwinkel 25°/140°; 45°/150°; 45°/120°; 75°/120° und 75°/90° verstanden. Der sechste Wert für 25°/170° wurde bei dieser quantitativen Betrachtung außer Acht gelassen, da er nicht sehr gut reproduzierbar ist. Man mißt hier bei einem Beobachtungswinkel von nur 10° gegen die Oberflächenebene und bei derart flachen Winkel trägt auch die Struktur der Oberfläche, die von der Art der Applikation abhängig ist, zum Meßergebnis merklich bei.

Je höher $\Delta H^*_{Anker}$, desto stärker ist die Verschiebung im Farbraum und der daraus resultierende Farbflop. Auch hier ergibt sich eine eindeutige Abstufung in folgender Reihenfolge:

Paliocrom® (Vergl.Bsp. 11) und Aloxal® (Vergl. Bsp. 7) mit nahezu keinen Flop, das erfindungsgemäße Pigment (Vergl.Bsp. 4) mit einem mittleren Flop und zuletzt mit Abstand Variocrom® (Vergl.Bsp. 9) mit einem sehr starken Flop.

In nachfolgender Tabelle sind die entsprechenden Werte für die erfindungsgemäßen Beispiele und Vergleichsbeispiele wiedergegeben.

**Tabelle 4:** Farbmetrische Daten zur Charakterisierung des Farbflops

| Muster | Minimales H*$_{Anker}$ | Maximales H*$_{Anker}$ | $\Delta H^*_{Anker}$ | C* (45°/110°) |
|---|---|---|---|---|
| Beispiel 1 | 75,62 | 80,51 | 4,89 | 63,4 |
| Beispiel 2 | 63,03 | 70,25 | 7,22 | 59,1 |

(fortgesetzt)

| Muster | Minimales H*$_{Anker}$ | Maximales H*$_{Anker}$ | ΔH*$_{Anker}$ | C* (45°/110°) |
|---|---|---|---|---|
| Beispiel 4 | 60,36 | 88,01 | 27,65 | 46,1 |
| Vergl. Beispiel 7 (Aloxal 3010) | 81,72 | 83,84 | 2,12 | 16,2 |
| Vergl. Beispiel 9 (Variocrom M-gold) | 19,24 | 96,3 | 77,05 | 58,6 |
| Vergl. Beispiel 11 (Paliocrom L 2800) | 61,79 | 62,79 | 1,00 | 86,3 |

Sicherheitsdaten:

Wie oben erwähnt, sind insbesondere mit Eisenoxid beschichtete Aluminiumpigmente aufgrund der Thermitreaktion sicherheitstechnisch nicht unbedenklich.

Um staubförmige Substanzen bezüglich ihrer Reaktivität charakterisieren zu können, werden verschiedene Kenndaten ermittelt. In Tabelle 4 sind die wichtigsten Werte aufgeführt und nachfolgend beschrieben.

Korngrößenverteilung:

Das Reaktionsverhalten von Stäuben wird sehr stark durch die Korngröße beeinflusst. Die Korngrößenverteilung im Produkt ist somit eng mit den explosionstechnischen Kenndaten verknüpft und muss daher stets in die Betrachtung von Versuchsergebnissen einbezogen werden. Deshalb steht am Anfang explosionstechnischer Untersuchungen von Stäuben die Bestimmung der Korngrößenverteilung, z.B. mittels der Lasergranulometrie.

Hierbei wird die Probe mit Ultraschall 300s in Isopropanol dispergiert. Nach kurzzeitigem Aufrühren mit einem Magnetrührer wird die Probe dann mittels eines Lasergranulometers vermessen. Der $D_{50}$-Wert entspricht dem Medianwert, und wird meist als Charakteristikum der Korn-größenverteilung herangezogen.

Mindestzündenergie:

Die Mindestzündenergie gibt Auskunft über die Zündwilligkeit aufgewirbelten Staubes. Die Bestimmung der Mindestzündenergie erfolgt in einer modifizierten Hartmann-Apparatur.

Sie ist die unter vorgeschriebene Versuchsbedingungen ermittelte, kleinste, in einem Kondensator gespeicherte elektrische Energie, die bei Entladung ausreicht, das zündwilligste Gemisch eines explosionsfähigen Staub/Luft-Gemisches zu entzünden.

Maximaler Explosionsdruck ($p_{max}$):

Unter vorgeschriebenen Versuchsbedingungen ermittelter maximaler Druck, der in einem geschlossenen Behälter bei der Explosion eines Staubes im Gemisch mit Luft auftritt.

$K_{St}$-Wert:

Hierbei handelt es sich um eine Staub- und prüfverfahrensspezifische Kenngrösse, die sich aus dem kubischen Gesetz errechnet. Sie ist zahlenmäßig gleich dem Wert für den maximalen zeitlichen Druckanstieg im 1-$m^3$-Behälter bei den in den Richtlinien VDI 3673, Blatt1 und VDI 2263, Blatt 1 sowie in ISO 6184/1 festgelegten Prüfbedingungen.

Untere Explosionsgrenze ($Ex_u$):

Untere Grenze des Konzentrationsbereichs, in dem ein Staub im Gemisch mit Luft zur Explosion gebracht werden kann.

Abbrenndauer:

Zeit, die eine Pulverschüttung bestimmten Volumens benötigt, um auf eine Länge von 10 cm nach Aktivierung mit einer 1000°C heißen Flamme abzubrennen, wobei der Zeitraum der Aktivierung 5min nicht überschreiten darf. Die Bestimmung erfolgt nach dem Handbuch Prüfungen und Kriterien Teil III, Abschnitt 33.2.1.4 der Bundesanstalt für Materialforschung.

**Tabelle 5: Sicherheitsdaten**

| Produkt | Cilas $D_{50}$ [$\mu$m] | Fe-Gehalt [%] | Al-Gehalt [%] | Abbrenn-dauer [sek./10cm] | Mindestzündenergie o.Ind. [mJ] | $Ex_u$ [g/m$^3$] | $K_{st}$ [barxm/s] | $p_{max}$ [bar] |
|---|---|---|---|---|---|---|---|---|
| Bsp.12 (Ferroxal 1) | 23,1 | 26,5 | 38,4 | brennt nicht | >1.000 | / | / | / |
| Bsp.13 (Ferroxal 2) | 23,7 | 19,9 | 31,0 | brennt nicht | >10.000 | / | / | / |
| Bsp.14 (VP 57424-G = MG 1291) | 21,1 | 12,2 | 45,4 | 10 | > 258 / < 514 | 60 | 399 | 12,4 |
| Vergl. Bsp.15 Al-Plv. E900 | 39 | <0,1 | 98,2 | brennt nicht | / | 30 | 400 | 12,5 |

Die in Tabelle 5 angegebenen Daten zeigen, daß die erfindungsgemäßen Pigmente den gleichen Sicherheitsstandard wie das Aluminiumpulver E900 haben. D.h., obgleich die erfindungsgemäßen Pigmente mit Eisenoxid beschichtete Aluminiumpigmente sind, sind sie nicht gefährlicher als das zum Vergleich herangezogene Aluminiumpulver, welches die handelsüblichen Sicherheitsnorrnen erfüllt.

Erfindungsgemäßes Beispiel 16:

Weiterhin wurde eine Nagellackformulierung mit folgender Zusammensetzung durch Mischen und Verrühren der Ausgangskomponenten hergestellt.

Tabelle 6: Zusammensetzung Nagellack

| Stoff | Konzentration in Gew.-% |
|---|---|
| Nitrocellulose | 15 |
| Ethylacetat | 21 |
| n-Butylacetat | 36 |
| Isopropylalkohol | 8 |
| Polyesterbindemittel | 9 |
| Dibutylphthalat | 5 |
| Campher | 2,0 |
| Stearalkonium Bentonit | 1,0 |
| Pigmente gemäß erfindungsgemäßem Beispiel 4 | 3,0 |

Mit diesem Nagellack wurden künstliche, gewölbte Fingernägel bestrichen Nach dem Trocknen des Lösungsmittels zeigte sich ein metallischer Effekt mit einem schwachen Farbflop von Zitronengold ins Rötliche.

Die Erfindung betrifft mithin die Bereitstellung farbiger Effektpigmente auf Basis naßchemisch oxidierter Aluminiumpigmente. Diese werden mit einer Metallchalkogenidschicht, vorzugsweise Metalloxidschicht, mit einem Brechungsindex > 1,95 naßchemisch beschichtet. Zwischen der porösen Aluminiumoxid/-hydroxidschicht und der hochbrechenden Metallchalkogenidschicht, vorzugsweise Metalloxidschicht, bildet sich eine Mischschicht aus, da die Metallchalkogenidschicht, vorzugsweise Metalloxidschicht, zumindest teilweise in die Poren der Aluminiumoxid/-hydroxidschicht einzudringen vermag.

Aus diesem Grunde verfügen die erfindungsgemäßen Effektpigmente über einen weichen, dezenten Farbflop. Je nach Schichtdicke des Aluminiumoxid/-hydroxids und Art und Schichtdicke des hochbrechenden Metallchalkogenids, vorzugsweise Metalloxids, können eine Vielzahl farbiger Effektpigmente bereitgestellt werden.

Die Vorteile der erfindungsgemäßen Effektpigmente liegen neben den dezenten Farbflops in einem guten Deckvermögen kombiniert mit hohem Glanz. Das gute Deckvermögen ergibt sich auch aus der Tatsache, daß bei der naßchemischen Oxidation der Aluminiumpigmente die Oxidschicht teilweise in den Aluminiumkern hineinwächst. Da Aluminiumpigmente mit Dicken von ca. 100 - 300 nm für optisch opakes Verhalten an sich zu dick sind, kann durch Wahl geeignet dicker Aluminiumpigmente die im farbigen Effektpigment letztlich verbliebene Aluminiumkerndicke auf eine Dicke von vorzugsweise 30 nm bis 80 nm optimiert werden und somit die Gesamtdicke des Effektpigmentes minimiert werden. Hierdurch wird der Formfaktor der Pigmente maximiert, was zu guter Orientierung im Anwendungsmedium und damit zu gutem Glanzgrad führt.

Die durch naßchemische Oxidation erzeugte Aluminiumoxid/-hydroxidschicht wirkt ferner als Sperrschicht zwischen dem Aluminiumkern und der hochbrechenden Metallchalkogenidschicht, vorzugsweise Metalloxidschicht. So kann insbesondere bei Verwendung von Eisenoxid als hochbrechende Metalloxidschicht eine aluminothermische Reaktion wirksam unterbunden werden. Mithin sind die erfindungsgemäßen Effektpigmente auch bei hohen Eisengehalten sicherheitstechnisch unbedenklich einsetzbar und herstellbar.

**Patentansprüche**

1. Effektpigmente mit einem Aluminium- oder Aluminiumlegierungskern und einer den Aluminium- oder Aluminiumlegierungskern umhüllenden Aluminiumoxid- oder Aluminiumoxid/hydroxid-haltigen Schicht, erhältlich durch naßchemische Oxidation plättchenförmiger Aluminium- oder Aluminiumlegierungs-Pigmente, wobei der Gehalt an metallischem Aluminium im Aluminium- oder Aluminiumlegierungskern nicht mehr als 90 Gew.-%, bezogen auf das Gesamtgewicht des Pigments, beträgt,
**dadurch gekennzeichnet,**
**daß** die oxidierten Aluminium- oder Aluminiumlegierungs-Pigmente wenigstens eine hochbrechende Metallchalkogenidschicht mit einem Brechungsindex von > 1,95 aufweisen und zwischen der hochbrechenden Metallchalkogenidschicht und der umhüllenden Aluminiumoxid- oder Aluminiumoxid/hydroxid-haltigen Schicht eine Mischschicht ausgebildet ist.

**2.** Effektpigmente nach Anspruch 1,
**dadurch gekennzeichnet,**
**daß** sich die Aluminiumoxid- oder Aluminiumoxid/-hydroxid-haltige Schicht und die hochbrechende Metallchalkogenidschicht mit einem Brechungsindex von > 1,95 zumindest teilweise gegenseitig durchdringen.

**3.** Effektpigmente nach Anspruch 1 oder 2,
**dadurch gekennzeichnet,**
**daß** die Dicke der Mischschicht zwischen der Aluminiumoxid- oder Aluminiumoxid/-hydroxid-haltigen Schicht und der hochbrechenden Metallchalkogenidschicht mit einem Brechungsindex von > 1,95 mindestens 10 nm beträgt.

**4.** Effektpigmente nach einem der Ansprüche 1 bis 3,
**dadurch gekennzeichnet,**
**daß** der Brechungsindex der Mischschicht zwischen der Aluminiumoxid- oder Aluminiumoxid/-hydroxid-haltigen Schicht und der hochbrechenden Metallchalkogenidschicht einen Gradientenverlauf senkrecht zur Pigmentoberfläche aufweist, der zwischen dem Brechungsindex der reinen Aluminiumoxid/-hydroxid-haltigen Schicht und dem Brechungsindex der hochbrechenden Metallchalkogenidschicht liegt.

**5.** Effektpigmente nach Anspruch 1,
**dadurch gekennzeichnet,**
**daß** zwischen der Aluminiumoxid oder Aluminiumoxid/-hydroxid-haltigen Schicht und der hochbrechenden Metallchalkogenidschicht wenigstens eine Oxidschicht aus einem Material mit einem Brechungsindex von < 1,8 angeordnet ist.

**6.** Effektpigmente nach Anspruch 5,
**dadurch gekennzeichnet,**
**daß** sich die Aluminiumoxid- oder Aluminiumoxid/-hydroxid-haltige Schicht und die Oxidschicht aus einem Material mit einem Brechungsindex < 1,8 zumindest teilweise gegenseitig durchdringen.

**7.** Effektpigmente nach Anspruch 5 oder 6,
**dadurch gekennzeichnet,**
**daß** die Aluminiumoxid- oder Aluminiumoxid/-hydroxid-haltige Schicht und die Oxidschicht aus einem Material mit einem Brechungsindex < 1,8 eine Mischschicht, die vorzugsweise eine Dicke von mindestens 10 nm aufweist, miteinander ausbilden.

**8.** Effektpigmente nach einem der Ansprüche 5 bis 7,
**dadurch gekennzeichnet,**
**daß** die Aluminiumoxid- oder Aluminiumoxid/-hydroxid-haltige Schicht, die Oxidschicht aus einem Material mit einem Brechungsindex < 1,8 und die hochbrechende Metallchalkogenidschicht mit einem Brechungsindex > 1,95 eine gemeinsame Mischschicht, die vorzugsweise eine Dicke von mindestens 10 nm aufweist, miteinander ausbilden.

**9.** Effektpigmente nach einem der Ansprüche 5 bis 8,
**dadurch gekennzeichnet,**
**daß** der Brechungsindex der Mischschicht zwischen der reinen Aluminiumoxid- oder Aluminiumoxid/-hydroxid-haltigen Schicht, der Oxidschicht aus einem Material mit einem Brechungsindex < 1,8 und der hochbrechenden Metalichalkogenidschicht einen Gradientenverlauf senkrecht zur Pigmentoberfläche aufweist, der zwischen dem Brechungsindex der Aluminiumoxid/-hydroxid-haltigen Schicht und jenem der reinen hochbrechenden Metallchalkogenidschicht liegt.

**10.** Effektpigmente nach einem der Ansprüche 5 bis 9,
**dadurch gekennzeichnet,**

**daß** die Oxidschicht aus einem Material mit einem Brechungsindex < 1,8 eine Siliziumdioxidhaltige Schicht ist.

11. Effektpigmente nach einem der vorstehenden Ansprüchen,
    **dadurch gekennzeichnet,**
    **daß** der Aluminiumkern eine durchschnittliche Schichtdicke von weniger als 250 nm, aufweist.

12. Effektpigmente nach einem der vorstehenden Ansprüchen,
    **dadurch gekennzeichnet,**
    **daß** der Aluminiumkern eine durchschnittliche Schichtdicke von weniger als 150 nm, vorzugsweise von etwa 30 nm bis 80 nm, aufweist.

13. Effektpigmente nach einem der vorstehenden Ansprüchen,
    **dadurch gekennzeichnet,**
    **daß** die wenigstens eine hochbrechende Metallchalkogenidschicht mit einem Brechungsindex von > 1,95 eine farbige Metallchalkogenidschicht oder mehrere farbige Metallchalkogenidschichten umfasst.

14. Effektpigmente nach einem der Ansprüche 1 bis 12,
    **dadurch gekennzeichnet,**
    **daß** die wenigstens eine Metallchalkogenidschicht oder mehreren Metallchalkogenidschichten mit einem Brechungsindex von > 1,95 eine Metallchalkogenidschicht oder mehrere Metallchalkogenidschichten ohne wesentliche Eigenfärbung umfassen.

15. Effektpigmente nach einem der Ansprüche 1 bis 12,
    **dadurch gekennzeichnet,**
    **daß** die wenigstens eine Metallchalkogenidschicht oder mehrere Metallchalkogenidschichten mit einem Brechungsindex > 1,95 farbige Metalichalkogenidschichten und Metallchalkogenidschichten ohne wesentliche Eigenfärbung umfassen und überwiegend in alternierender Weise angeordnet sind.

16. Effektpigmente nach Anspruch 13 oder 15,
    **dadurch gekennzeichnet,**
    **daß** die eine farbige Metallchalkogenidschicht oder mehreren farbigen Metallchalkogenidschichten aus der Gruppe ausgewählt werden, die aus vorzugsweise Eisenoxid, Vanadiumoxid, Wolframoxid, Chromoxid und deren Oxidhydraten sowie Gemischen davon besteht.

17. Effektpigmente nach Anspruch 16,
    **dadurch gekennzeichnet,**
    **daß** das Eisenoxid in der Modifikation Hämatit, Goethit, Magnetit oder Gemischen davon vorliegt.

18. Effektpigmente nach Anspruch 14 oder 15,
    **dadurch gekennzeichnet,**
    **daß** die eine Metallchalkogenidschicht oder mehreren Metallchalkogenidschichten ohne wesentliche Eigenfärbung aus der Gruppe ausgewählt werden, die aus Titanoxid, Zirkoniumoxid, Zinkoxid, Zinnoxid, Ceroxid und deren Oxidhydraten sowie Gemischen davon besteht.

19. Effektpigmente nach einem der Ansprüche 5 bis 13,
    **dadurch gekennzeichnet,**
    **daß** auf der Aluminiumoxid oder Aluminiumoxid/-hydroxid-haltigen Schicht eine Siliziumdioxidschicht und nachfolgend eine Eisenoxidschicht aufgebracht ist.

20. Effektpigmente nach einem der vorstehenden Ansprüche,
    **dadurch gekennzeichnet,**
    **daß** auf der wenigstens einen Metallchalkogenidschicht mit einem Brechungsindex von > 1,95 wenigstens eine Oxidschicht mit einem Brechungsindex von < 1,8 aufgebracht ist.

21. Effektpigmente nach Anspruch 20,
    **dadurch gekennzeichnet,**
    **daß** die wenigstens eine Oxidschicht mit einem Brechungsindex von < 1,8 aus der Gruppe ausgewählt wird, die aus Siliziumdioxid, Aluminiumoxid und/oder-hydroxid, Boroxid und Gemischen davon besteht.

**22.** Effektpigmente nach einem der vorstehenden Ansprüche,
**dadurch gekennzeichnet,**
**daß** sie einen Formfaktor von über 20, vorzugsweise über 25 besitzen.

**23.** Effektpigmente nach einem der vorstehenden Ansprüche,
**dadurch gekennzeichnet,**
**daß** sie einen Formfaktor von über 40 besitzen.

**24.** Effektpigmente nach einem der vorstehenden Ansprüche,
**dadurch gekennzeichnet,**
**daß** die Aluminium- oder Aluminiumlegierungs-Pigmente mit organischen Gruppen oder organischen Verbindungen oberflächenmodifiziert sind.

**25.** Effektpigmente nach einem der vorstehenden Ansprüche,
**dadurch gekennzeichnet,**
**daß** die Aluminium- oder Aluminiumlegierungs-Pigmente ein farbiges Erscheinungsbild mit einem weichen Farbflop aufweisen.

**26.** Effektpigmente nach einem der vorstehenden Ansprüche,
**dadurch gekennzeichnet,**
**daß** die Metallchalkogenide Metalloxide, Metallsulfide, Metallselenide, Metalltelluride oder Gemische davon sind.

**27.** Effektpigmente nach einem der vorstehenden Ansprüche,
**dadurch gekennzeichnet,**
**daß** die Aluminiumlegierung wenigstens 5 Gew.-%, bezogen auf den Metallgehalt des Pigmentes, eines oder mehrerer von Aluminium verschiedener Metalle, vorzugsweise Eisen, Mangan, Kupfer, Vanadium, Chrom, Nickel, Kobalt, Silizium, Magnesium, Zink und/oder Titan, enthält.

**28.** Verfahren zur Herstellung von Effektpigmente nach einem der Ansprüche 1 bis 27, **dadurch gekennzeichnet, daß** es die folgenden Schritte umfasst:

(a) Oxidieren von Aluminium- oder Aluminiumlegierungs-Pigmenten, die in einer organisches Lösungsmittel enthaltenden Flüssigphase suspendiert sind, unter Verwendung eines Oxidationsmittels,
(b) Aufbringen wenigstens einer Metallchalkogenidschicht mit einem Brechungsindex von > 1,95 auf die im Schritt (a) oxidierten Pigmente, wobei sich zwischen der Metallchalkogenidschicht und der Aluminiumoxid/-hydroxidschicht eine Mischschicht ausbildet.

**29.** Verfahren nach Anspruch 28,
**dadurch gekennzeichnet,**
**daß** vor dem Aufbringen der wenigstens einen hochbrechenden Metallchalkogenidschicht mit einem Brechungsindex > 1,95 in Schritt (b) eine Oxidschicht mit einem Brechungsindex von < 1,8, aufgebracht wird.

**30.** Verfahren nach Anspruch 28 oder 29,
**dadurch gekennzeichnet,**
**daß** das Oxidationsmittel im Schritt (a) Wasser und das organische Lösungsmittel mit Wasser mischbar ist.

**31.** Verfahren nach Anspruch 30,
**dadurch gekennzeichnet,**
**daß** die auf die Aluminium- oder Aluminiumlegierungs-Pigmente bezogene Wassermenge 10 bis 120 Gew.-%, vorzugsweise 15 bis 55 Gew.-%, beträgt.

**32.** Verfahren nach einem der Ansprüche 28 bis 30,
**dadurch gekennzeichnet,**
**daß** in Schritt (a) ein Katalysator zugesetzt wird.

**33.** Verfahren nach einem der Ansprüche 28 bis 32,
**dadurch gekennzeichnet,**
**daß** im Schritt (b) das Aufbringen der Metallchalkogenidschicht durch Zugeben von in im wesentlichen organischen Lösungsmittel gelöstem Metallsalz zu einer Dispersion von im Schritt (a) oxidierten Aluminium- oder Aluminiumlegierungs-Pigmenten erfolgt.

34. Verfahren nach einem der Ansprüche 28 bis 33,
**dadurch gekennzeichnet,**
**daß** das organische Lösungsmittel aus der Gruppe, die aus Alkoholen, Glykolen und Ketonen, vorzugsweise Ethanol, n-Propanol, i-Propanol, n-Butanol, i-Butanol, tert.-Butanol, Methoxypropanol, Aceton, Butylglykol und Gemischen davon besteht, ausgewählt wird.

35. Verfahren nach einem der Ansprüche 28 bis 34,
**dadurch gekennzeichnet,**
**daß** die Oxidation im Schritt (a) bei einer zwischen Zimmertemperatur und den Siedepunkt des Gemisches aus Wasser und organischem Lösungsmittel liegenden Temperatur erfolgt.

36. Verfahren nach einem der Ansprüche 28 bis 35,
**dadurch gekennzeichnet,**
**daß** im Schritt (a) die Suspension einen pH-Wert zwischen pH 7 und pH 12 aufweist.

37. Verwendung der Effektpigmente nach einem der Ansprüche 1 bis 27 in Coatings, Lacken, Automobillacken, Pulverlacken, Druckfarben, Tinten, Kunststoffen, Gläsern, Keramiken oder kosmetischen Zubereitungen.

38. Verwendung nach Anspruch 37,
**dadurch gekennzeichnet,**
**daß** die kosmetischen Zubereitungen aus der Gruppe ausgewählt werden, die aus Nagellack, Lippenstift, Make-up, Haarpflegemittel, Hautpflegemittel, Mascara, Lidschatten, Eyeliner, Rouge, Parfum, Eau de Toilette, Puder (lose oder gepreßt), Tattooformulierungen besteht.

39. Beschichtungsmittel,
**dadurch gekennzeichnet,**
**daß** es Effektpigmente nach einem der Ansprüche 1-27 enthält.

40. Beschichtungsmittel nach Anspruch 39,
**dadurch gekennzeichnet,**
**daß** es aus der Gruppe, die aus Coatings, Lacken, Automobillacken, Druckfarben, Tinten, Kunststoffen, Gläsern, Keramiken oder kosmetischen Zubereitungen besteht, ausgewählt wird.

41. Beschichtungsmittel nach Anspruch 40,
**dadurch gekennzeichnet,**
**daß** die kosmetische Zubereitung ein Nagellack ist.

**Claims**

1. Effect pigments having an aluminium or aluminium-alloy core and, enveloping the aluminium or aluminium-alloy core, a coat containing aluminium oxide or aluminium oxide/hydroxide, obtainable by wet-chemical oxidation of platelet-shaped aluminium pigments or aluminium-alloy pigments, the amount of metallic aluminium in the aluminium or aluminium-alloy core being not more than 90% by weight, based on the total weight of the pigment, **characterized in that** the oxidized aluminium or aluminium-alloy pigments have at least one high-index metal chalcogenide layer having a refractive index of > 1.95, and a mixed layer formed between the high-index metal chalcogenide layer and the enveloping layer containing aluminium oxide or aluminium oxide/hydroxide.

2. Effect pigments according to Claim 1, **characterized in that** the layer containing aluminium oxide or aluminium oxide/hydroxide and the high-index metal chalcogenide layer having a refractive index of > 1.95 at least partly interpenetrate.

3. Effect pigments according to Claim 1 or 2, **characterized in that** the thickness of the mixed layer between the layer containing aluminium oxide or aluminium oxide/hydroxide and the high-index metal chalcogenide layer having a refractive index of > 1.95 is at least 10 nm.

**4.** Effect pigments according to one of Claims 1 to 3, **characterized in that** the refractive index of the mixed layer between the layer containing aluminium oxide or aluminium oxide/hydroxide and the high-index metal chalcogenide layer exhibits a gradient course perpendicularly to the pigment surface, said gradient course lying between the refractive index of the pure layer containing aluminium oxide/hydroxide and the refractive index of the high-index metal chalcogenide layer.

**5.** Effect pigments according to Claim 1, **characterized in that** disposed between the layer containing aluminium oxide or aluminium oxide/hydroxide and the high-index metal chalcogenide layer there is at least one oxide layer of a material having a refractive index of < 1.8.

**6.** Effect pigments according to Claim 5, **characterized in that** the layer containing aluminium oxide or aluminium oxide/hydroxide and the oxide layer of material having a refractive index < 1.8 at least partly interpenetrate.

**7.** Effect pigments according to Claim 5 or 6, **characterized in that** the layer containing aluminium oxide or aluminium oxide/hydroxide and the oxide layer of material having a refractive index < 1.8 form a mixed layer which preferably has a thickness of at least 10 nm.

**8.** Effect pigments according to one of Claims 5 to 7, **characterized in that** the layer containing aluminium oxide or aluminium oxide/hydroxide, the oxide layer of material having a refractive index < 1.8 and the high-index metal chalcogenide layer having a refractive index > 1.95 form a joint mixed layer which preferably has a thickness of at least 10 nm.

**9.** Effect pigments according to one of Claims 5 to 8, **characterized in that** the refractive index of the mixed layer between the pure layer containing aluminium oxide or aluminium oxide/hydroxide, the oxide layer of material having a refractive index < 1.8 and the high-index metal chalcogenide layer exhibits a gradient course perpendicularly to the pigment surface, said gradient course lying between the refractive index of the layer containing aluminium oxide/hydroxide and that of the pure high-index metal chalcogenide layer.

**10.** Effect pigments according to one of Claims 5 to 9, **characterized in that** the oxide layer of material having a refractive index < 1.8 is a layer containing silicon dioxide.

**11.** Effect pigments according to any one of the preceding claims, **characterized in that** the aluminium core has an average layer thickness of less than 250 nm.

**12.** Effect pigments according to any one of the preceding claims, **characterized in that** the aluminium core has an average layer thickness of less than 150 nm, preferably of about 30 nm to 80 nm.

**13.** Effect pigments according to any one of the preceding claims, **characterized in that** the at least one high-index metal chalcogenide layer having a refractive index of > 1.95 comprises one coloured metal chalcogenide layer or two or more coloured metal chalcogenide layers.

**14.** Effect pigments according to one of Claims 1 to 12, **characterized in that** the at least one metal chalcogenide layer or two or more metal chalcogenide layers having a refractive index of > 1.95 comprise a metal chalcogenide layer or two or more metal chalcogenide layers without substantial intrinsic colouring.

**15.** Effect pigments according to one of Claims 1 to 12, **characterized in that** the at least one metal chalcogenide layer or two or more metal chalcogenide layers having a refractive index of > 1.95 comprise coloured metal chalcogenide layers and metal chalcogenide layers without substantial intrinsic colouring and are predominantly disposed in alternation.

**16.** Effect pigments according to Claim 13 or 15, **characterized in that** the one coloured metal chalcogenide layer or two or more coloured metal chalcogenide layers are selected from the group consisting of, preferably, iron oxide, vanadium oxide, tungsten oxide, chromium oxide and their oxide hydrates and also mixtures thereof.

**17.** Effect pigments according to Claim 16, **characterized in that** the iron oxide is in the hematite, goethite or magnetite modification or mixtures thereof.

**18.** Effect pigments according to Claim 14 or 15, **characterized in that** the one metal chalcogenide layer or two or more metal chalcogenide layers without substantial intrinsic colouring are selected from the group consisting of titanium oxide, zirconium oxide, zinc oxide, tin oxide, cerium oxide and their oxide hydrates and mixtures thereof.

19. Effect pigments according to one of Claims 5 to 13, **characterized in that** a silicon dioxide layer and thereafter an iron oxide layer has been applied to the layer containing aluminium oxide or aluminium oxide/hydroxide.

20. Effect pigments according to one of the preceding claims, **characterized in that** at least one oxide layer having a refractive index of < 1.8 has been applied to the at least one metal chalcogenide layer having a refractive index of > 1.95.

21. Effect pigments according to Claim 20, **characterized in that** the at least one oxide layer having a refractive index of < 1.8 is selected from the group consisting of silicon dioxide, aluminium oxide and/or aluminium hydroxide, boron oxide and mixtures thereof.

22. Effect pigments according to any one of the preceding claims, **characterized in that** they possess a shape factor of more than 20, preferably more than 25.

23. Effect pigments according to any one of the preceding claims, **characterized in that** they possess a shape factor of more than 40.

24. Effect pigments according to any one of the preceding claims, **characterized in that** the aluminium pigments or aluminium-alloy pigments have been surface-modified with organic groups or organic compounds.

25. Effect pigments according to any one of the preceding claims, **characterized in that** the aluminium pigments or aluminium-alloy pigments have a coloured appearance with a soft colour flop.

26. Effect pigments according to any one of the preceding claims, **characterized in that** the metal chalcogenides are metal oxides, metal sulphides, metal selenides, metal tellurides or mixtures thereof.

27. Effect pigments according to any one of the preceding claims, **characterized in that** the aluminium alloy contains at least 5% by weight, based on the metal content of the pigment, of one or more metals other than aluminium, preferably iron, manganese, copper, vanadium, chromium, nickel, cobalt, silicon, magnesium, zinc and/or titanium.

28. Process for preparing effect pigments according to one of Claims 1 to 27, **characterized in that** it comprises the following steps:

(a) oxidizing aluminium pigments or aluminium-alloy pigments which are in suspension in a liquid phase comprising organic solvent, using an oxidizing agent,
(b) applying at least one metal chalcogenide layer having a refractive index of > 1.95 to the pigments oxidized in step (a), a mixed layer being formed between the metal chalcogenide layer and the aluminium oxide/hydroxide layer.

29. Process according to Claim 28, **characterized in that** prior to the application of the at least one high-index metal chalcogenide layer having a refractive index > 1.95 in step (b) an oxide layer having a refractive index of < 1.8 is applied.

30. Process according to Claim 28 or 29, **characterized in that** the oxidizing agent in step (a) is water and the organic solvent is miscible with water.

31. Process according to Claim 30, **characterized in that** the amount of water, based on the aluminium pigments or aluminium-alloy pigments, is 10% to 120%, preferably 15% to 55% by weight.

32. Process according to one of Claims 28 to 30, **characterized in that** in step (a) a catalyst is added.

33. Process according to one of Claims 28 to 32, **characterized in that** in step (b) the metal chalcogenide layer is applied by adding metal salt in solution in substantially organic solvent to a dispersion of aluminium pigments or aluminium-alloy pigments oxidized in step (a).

34. Process according to one of Claims 28 to 33, **characterized in that** the organic solvent is selected from the group consisting of alcohols, glycols and ketones, preferably ethanol, n-propanol, isopropanol, n-butanol, isobutanol, tert-butanol, methoxypropanol, acetone, butyl glycol and mixtures thereof.

35. Process according to one of Claims 28 to 34, **characterized in that** the oxidation in step (a) takes place at a temperature situated between room temperature and the boiling point of the mixture of water and organic solvent.

36. Process according to one of Claims 28 to 35, **characterized in that** in step (a) the suspension has a pH of between pH 7 and pH 12.

37. Use of the effect pigments according to one of Claims 1 to 27 in coatings, paints, automotive finishes, powder coating materials, inks, including printing inks, plastics, glasses, ceramics or cosmetic preparations.

38. Use according to Claim 37, **characterized in that** the cosmetic preparations are selected from the group consisting of nail varnish, lipstick, makeup, hair care products, skincare products, mascara, eyeshadow, eyeliner, rouge, perfume, eau de toilette, powder (loose or pressed), and tattoo formulations.

39. Coating composition **characterized in that** it comprises effect pigments according to one of Claims 1-27.

40. Coating composition according to Claim 39, **characterized in that** it is selected from the group consisting of coatings, paints, automotive finishes, inks, including printing inks, plastics, glasses, ceramics and cosmetic preparations.

41. Coating composition according to Claim 40, **characterized in that** the cosmetic preparation is a nail varnish.

## Revendications

1. Pigments à effets comprenant un coeur d'aluminium ou d'alliage d'aluminium et une couche contenant de l'oxyde d'aluminium ou de l'oxyde/hydroxyde d'aluminium enrobant le coeur d'aluminium ou d'alliage d'aluminium, que l'on obtient par oxydation hydrochimique de pigments d'aluminium ou d'alliage d'aluminium sous forme de plaquettes, la teneur en aluminium métallique dans le noyau d'aluminium ou d'alliage d'aluminium ne dépassant pas 90 % en poids, rapporté au poids total du pigment,
   **caractérisés en ce que**,
   les pigments d'aluminium ou d'alliage d'aluminium oxydés présentent au moins une couche de chalcogénure métallique hautement réfractaire ayant un indice de réfraction > 1,95 et **en ce qu'**une couche mixte se forme entre la couche de chalcogénure métallique hautement réfractaire et la couche contenant l'enrobage d'oxyde d'aluminium ou l'oxyde/hydroxyde d'aluminium.

2. Pigments à effets selon la revendication 1, **caractérisés en ce que**
   la couche contenant de l'oxyde d'aluminium ou de l'oxyde/hydroxyde d'aluminium et la couche de chalcogénure métallique hautement réfractaire ayant un indice de réfraction > 1,95 s'interpénètrent au moins partiellement.

3. Pigments à effets selon la revendication 1 ou 2, **caractérisés en ce que**
   l'épaisseur de la couche mixte entre la couche contenant de l'oxyde d'aluminium ou de l'oxyde/hydroxyde d'aluminium et la couche de chalcogénure métallique hautement réfractaire ayant un indice de réfraction > 1,95 est d'au moins 10 nm.

4. Pigments à effets selon l'un quelconque des revendications 1 à 3, **caractérisés en ce que**
   l'indice de réfraction de la couche mixte entre la couche contenant de l'oxyde d'aluminium ou de l'oxyde/hydroxyde d'aluminium et la couche de chalcogénure métallique hautement réfractaire présente un gradient qui évolue à la verticale par rapport à la surface des pigments, qui se situe entre l'indice de réfraction de la couche d'oxyde/hydroxyde d'aluminium pure et l'indice de réfraction de la couche de chalcogénure métallique hautement réfractaire.

5. Effets à pigments selon la revendication 1, **caractérisés en ce que**
   au moins une couche d'oxyde constituée d'un matériau ayant un indice de réfraction < 1,8 soit intercalée entre la couche contenant de l'oxyde d'aluminium ou de l'oxyde/hydroxyde d'aluminium et la couche de chalcogénure métallique hautement réfractaire.

6. Effets à pigments selon la revendication 5, **caractérisés en ce que**
la couche contenant de l'oxyde d'aluminium ou de l'oxyde/hydroxyde d'aluminium et la couche d'oxyde constituée d'un matériau ayant un indice de réfraction < 1,8 s'interpénètrent au moins partiellement.

7. Effets à pigments selon la revendication 5 ou 6, **caractérisés en ce que**
la couche contenant de l'oxyde d'aluminium ou de l'oxyde/hydroxyde d'aluminium et la couche d'oxyde constituée d'un matériau ayant un indice de réfraction < 1,8 forment ensemble une couche mixte, qui présente de préférence une épaisseur d'au moins 10 nm.

8. Effets à pigments selon l'une quelconque des revendications 5 à 7, **caractérisés en ce que**
la couche contenant de l'oxyde d'aluminium ou de l'oxyde/hydroxyde d'aluminium, la couche d'oxyde constituée d'un matériau ayant un indice de réfraction < 1,8 et la couche de chalcogénure métallique hautement réfractaire ayant un indice de réfraction > 1,95 forment ensemble une couche mixte, qui présente de préférence une épaisseur d'au moins 10 nm.

9. Effets à pigments selon l'une quelconque des revendications 5 à 8,
**caractérisés en ce que**
l'indice de réfraction de la couche mixte entre la couche pure contenant de l'oxyde d'aluminium ou de l'oxyde/hydroxyde d'aluminium, la couche d'oxyde constituée d'un matériau ayant un indice de réfraction < 1,8 et la couche de chalcogénure métallique hautement réfractaire présente un gradient évoluant à la verticale par rapport à la surface des pigments, qui se situe entre l'indice de réfraction de la couche d'oxyde/hydroxyde d'aluminium et celui de la couche de chalcogénure métallique pure hautement réfractaire.

10. Effets à pigments selon l'une quelconque des revendications 5 à 9,
**caractérisés en ce que**
la couche d'oxyde constituée d'un matériau ayant un indice de réfraction >1,8 est une couche contenant un dioxyde de silicium.

11. Pigments à effets selon l'une quelconque des revendications précédentes,
**caractérisés en ce que**
le noyau d'aluminium présente une couche d'une épaisseur moyenne inférieure à 250 nm.

12. Pigments à effets selon l'une quelconque des revendications précédentes,
**caractérisés en ce que**
le noyau d'aluminium présente une couche d'une épaisseur moyenne inférieure à 150 nm, de préférence entre 30 nm et 80 nm environ.

13. Pigments à effets selon l'une quelconque des revendications précédentes,
**caractérisés en ce que**
au moins une couche de chalcogénure métallique ayant un indice de réfraction > 1,95 comprend une couche de chalcogénure métallique colorée ou plusieurs couches de chalcogénure métallique colorées.

14. Pigments à effets selon l'une des revendications 1 à 12,
**caractérisés en ce que**
la couche de chalcogénure métallique ou les couches de chalcogénure métallique ayant un indice de réfraction > 1,95 comprend une couche de chalcogénure métallique ou plusieurs couches de chalcogénure métallique sans coloration vraiment propre.

15. Pigments à effets selon l'une des revendications 1 à 12,
**caractérisés en ce que**
la couche de chalcogénure métallique ou les couches de chalcogénure métallique ayant un indice de réfraction > 1,95 comprennent des couches de chalcogénure métallique colorées et des couches de chalcogénure métallique sans coloration vraiment propre et qu'elles sont disposées avant tout en alternance.

16. Pigments à effets selon la revendication 13 ou 15,
**caractérisés en ce que**
une couche de chalcogénure métallique colorée ou plusieurs couches de chalcogénure métallique colorées sont choisies dans le groupe qui est constitué de préférence par l'oxyde de fer, l'oxyde de vanadium, l'oxyde de tungstène,

28

l'oxyde de chrome et leurs oxydes hydratés ainsi que des mélanges de ceux-ci.

**17.** Pigments à effets selon la revendication 16, **caractérisés en ce que**
l'oxyde de fer est présent sous sa forme modifiée d'hématite, de goethite, de magnétite ou de mélanges de ceux-ci.

**18.** Pigments à effets selon la revendication 14 ou 15,
**caractérisés en ce que**
une couche de chalcogénure métallique ou plusieurs couches de chalcogénure métallique sans coloration propre sont choisies dans le groupe qui est constitué par l'oxyde de titane, l'oxyde de zirconium, l'oxyde de zinc, le céroxyde et leurs oxydes hydratés ainsi que des mélanges de ceux-ci.

**19.** Pigments à effets selon l'une quelconque des revendications 5 à 13,
**caractérisés en ce que**
une couche d'oxyde de silicium puis une couche d'oxyde de fer sont déposées sur la couche contenant l'oxyde d'aluminium ou l'oxyde/hydroxyde d'aluminium.

**20.** Pigments à effets selon l'une quelconque des revendications précédentes,
**caractérisés en ce que**
au moins une couche d'oxyde ayant un indice de réfraction < 1,8 est déposée sur au moins une couche de chalcogénure métallique ayant un indice de réfraction > 1,95.

**21.** Pigments à effets selon la revendication 20 **caractérisés en ce que**
au moins une couche d'oxyde ayant un indice de réfraction < 1,8 est choisie dans le groupe qui est constitué par l'oxyde de silicium, l'oxyde et/ou l'hydroxyde d'aluminium, l'oxyde de bore et des mélanges de ceux-ci.

**22.** Pigments à effets selon l'une quelconque des revendications précédentes,
**caractérisés en ce qu'**
ils possèdent un facteur de forme supérieur à 20, de préférence supérieur à 25.

**23.** Pigments à effets selon l'une quelconque des revendications précédentes,
**caractérisés en ce qu'**
ils possèdent un facteur de forme supérieur à 40.

**24.** Pigments à effets selon l'une quelconque des revendications précédentes,
**caractérisés en ce que**
les pigments à base d'aluminium ou d'alliage d'aluminium sont modifiés en surface par des groupes organiques ou des composés organiques.

**25.** Pigments à effets selon l'une quelconque des revendications précédentes,
**caractérisés en ce que**
les pigments à base d'aluminium ou d'alliage d'aluminium présentent un aspect coloré avec un léger double ton.

**26.** Pigments à effets selon l'une quelconque des revendications précédentes,
**caractérisés en ce que**
les chalcogénures métalliques sont des oxydes de métaux, des sulfure de métaux, des séléniures de métaux, des tellurures de métaux ou des mélanges de ceux-ci.

**27.** Pigments à effets selon l'une quelconque des revendications précédentes,
**caractérisés en ce que**
l'alliage d'aluminium contient au moins 5 % en poids, rapporté à la teneur en métal du pigment, d'ou ou de plusieurs métaux différents de l'aluminium, de préférence, de fer, de manganèse, de cuivre, de vanadium, de chrome, de nickel, de cobalt, de silicium, de magnésium, de zinc et/ou de titane.

**28.** Procédé pour la fabrication de pigments à effets selon l'une quelconque des revendications 1 à 27,
**caractérisé en ce qu'**il comprend les étapes suivantes :

(a) l'oxydation des pigments à base d'aluminium ou d'alliage d'aluminium, qui sont suspendus dans une phase liquide contenant une solvant organique, grâce à l'utilisation d'un agent oxydant,

(b) le dépôt d'au moins une couche de chalcogénure métallique ayant un indice de réfraction > 1,95 sur les pigments oxydés de la couche (a), ce qui forme une couche mixte entre la couche de chalcogénure métallique et la couche d'oxyde/hydroxyde d'aluminium.

**29.** Procédé selon la revendication 28,
**caractérisé en ce que**
une couche d'oxyde ayant un indice de réfraction < 1,8 est déposée avant le dépôt d'au moins une couche de chalcogénure métallique hautement réfractaire ayant un indice de réfraction > 1,95 à l'étape (b).

**30.** Procédé selon la revendication 28 ou 29,
**caractérisé en ce que**
l'agent oxydant à l'étape (a) est de l'eau et **en ce que** le solvant organique est miscible dans l'eau.

**31.** Procédé selon la revendication 30,
**caractérisé en ce que**
les pigments à base d'aluminium ou d'alliage d'aluminium représentent de 10 à 120 % en poids, de préférence de 15 à 55 % en poids, rapportés à la quantité d'eau.

**32.** Procédé selon l'une quelconque des revendications 28 à 30,
**caractérisé en ce que**
un catalyseur est ajouté à l'étape (a).

**33.** Procédé selon l'une quelconque des revendications 28 à 32,
**caractérisé en ce que**
à l'étape (b) le dépôt de la couche de chalcogénure métallique se fait par ajout de sel métallique dissout essentiellement dans un solvant organique afin d'obtenir une dispersion des pigments d'aluminium ou d'alliage d'aluminium oxydés à l'étape (a) .

**34.** Procédé selon l'une quelconque des revendications 28 à 33, **caractérisé en ce que**
le solvant organique est choisi du groupe constitué par les alcools, glycols et cétones, de préférence l'éthanol, le n-propnaol, le i-propanol, le n-butanol, le i-butanol, le tert-butanol, le méthoxypropanol, l'acétone, le butyle glycol et des mélanges de ceux-ci.

**35.** Procédé selon l'une quelconque des revendications 28 à 34, **caractérisé en ce que**
l'oxydation de l'étape (a) a lieu à une température située entre la température ambiante et le point d'ébullition du mélange constitué d'eau et du solvant organique.

**36.** Procédé selon l'une quelconque des revendications 28 à 35,
**caractérisé en ce que**
la suspension de l'étape (a) présente une valeur de pH entre pH 7 et pH 12.

**37.** Utilisation de pigments à effets selon l'une quelconque des revendications 1 à 27 dans des enduits, laques, laques pour l'industrie automobile, laques en poudre, couleurs d'imprimerie, encres, plastiques, verres, céramiques et préparations cosmétiques.

**38.** Utilisation selon la revendication 37, **caractérisée en ce que**
les préparations cosmétiques sont choisies dans le groupe constitué par les vernis à ongles, les crayons à lèvres, le maquillage, les soins capillaires, les soins cutanés, le mascara, les ombres à paupières, les eyeliners, les rouges à lèvres, les parfum, les eaux de toilette, les poudres (libres ou compactes), les formulations pour tatouage.

**39.** Agent de revêtement,
**caractérisé en ce qu'**
il contient des pigments à effets selon l'une quelconque des revendications 1-27.

**40.** Agent de revêtement selon la revendication 39, **caractérisé en ce qu'**
il est choisi parmi le groupe constitué par les enduits, laques, laques pour l'industrie automobile, couleurs d'imprimerie, encres, plastiques, verres, céramiques ou préparations cosmétiques.

**41.** Agent de revêtement selon la revendication 40,
**caractérisé en ce que**
la préparation cosmétique est un vernis à ongles.

Fig. 1

EP 1 685 198 B1

Fig. 2

EP 1 685 198 B1

**Abb. 3: Waring Blendortest**

- △ Bsp. 2
- ■ Vergl.Bsp. 6
- ✕ Vergl.Bsp. 7
- ○ Vergl.Bsp. 9

Helligkeitsdifferenz (dL*)

Messwinkel

Sollbereich

EP 1 685 198 B1

**Abb. 4: Deckungsvergleich**

—▲—Bsp. 2    —☐—Bsp. 4    —●—Bsp. 5    —✳—Vergl.Bsp. 7    —☐—Vergl.Bsp. 8    ——Vergl.Bsp. 10    —△—Vergl.Bsp. 11

ideale Deckung

Quotient [ L*(110°/schwarz) / L*(110°/weiss) ]

Pigmentierungshöhe in Gew.-%

EP 1 685 198 B1

35

Abb. 5: Deckungsvergleich

Abb. 6: a*,b* - System

Bsp. 1 — Bsp.2 — Bsp. 4 — Bsp. 5 — Vergl.Bsp. 8 — Vergl.Bsp. 9 — Vergl.Bsp. 10 — Vergl.Bsp. 11

gelb

grün

rot

a*

b*

# Fig.7: CieLab-Koordinaten in konventioneller Meßgeometrie und Effektanker

Legend:
— ■— Bsp.1 (Effektlinie)
· · ⊞ · · Bsp.1 (Effektanker)
— ▲— Bsp.2 (Effektlinie)
· · △· · Bsp.2 (Effektanker)
—✕— Bsp.4 (Effektlinie)
· · ✕ · · Bsp.4 (Effektanker)
—✴—Vergl. Bsp.7 (Effektlinie)
· · ✳ · · Vergl.Bsp.7 (Effektanker)
—○—Vergl.Bsp.9 (Effektlinie)
· · ○ · · Vergl.Bsp.9 (Effektanker)
—△—Vergl.Bsp.11 (Effektlinie)
· · △· · Vergl.Bsp.11 (Effektanker)

EP 1 685 198 B1